# EUROPÄISCHE PATENTSCHRIFT

(11) **EP 1 345 492 B1**
(45) Veröffentlichungstag und Bekanntmachung des Hinweises auf die Patenterteilung: **08.02.2006**
(21) Anmeldenummer: 01994734.0
(22) Anmeldetag: 27.11.2001
(51) Int. Cl.: A01N 37/40, A01N 25/30

(54) **HERBIZIDE MITTEL**
HERBICIDE AGENT
AGENTS HERBICIDES

(30) Priorität: 20.12.2000 DE 10063960
(43) Veröffentlichungstag der Anmeldung: 24.09.2003
(73) Patentinhaber: Bayer CropScience GmbH, 65929 Frankfurt (DE)
(72) Erfinder: KOCUR, Jean, 65719 Hofheim (DE); KRAUSE, Hans-Peter, 65719 Hofheim (DE); MARTINEZ DE UNA, Julio, 65835 Liederbach (DE); HUFF, Hans, Philipp, 65817 Eppstein (DE); BICKERS, Udo, 49835 Wietmarschen (DE); SCHNABEL, Gerhard, 63820 Elsenfeld (DE)
(86) Internationale Anmeldenummer: PCT/EP2001/013787
(87) Internationale Veröffentlichungsnummer: WO 2002/049432

(56) Entgegenhaltungen:
- EP-A- 0 228 943
- EP-A- 0 261 492
- EP-A- 0 306 376
- EP-A- 0 968 649
- WO-A-00/51427
- WO-A-00/64258
- WO-A-01/50861
- WO-A-01/76368
- WO-A-98/31223
- WO-A-99/55155
- CA-A- 2 093 377
- DD-A- 268 147
- US-A- 6 093 681
- DATABASE WPI Section Ch, Week 198938 Derwent Publications Ltd., London, GB; Class A97, AN 1989-273339 XP002196614 & JP 01 197403 A (SHIONOGI & CO LTD), 9. August 1989 (1989-08-09)

## Beschreibung

Die vorliegende Erfindung betrifft das Gebiet des chemischen Pflanzenschutzes, insbesondere Kombinationen spezieller Herbizide vom Hydroxybenzonitril-Typ mit speziellen Tensiden.

Herbizide vom Hydroxybenzonitril-Typ wie loxynil oder Bromoxynil sowie deren Derivate wie Salze oder Ester sind geeignet zur Bekämpfung von unerwünschtem Pflanzenwuchs z. B. in Kulturen wie Mais oder Weizen.

Ebenso ist bekannt, daß die vorstehend genannten herbiziden Verbindungen zur Herstellung von Standardformulierungen mit Tensiden kombiniert werden können.

Die Aufgabe der vorliegenden Erfindung bestand darin, herbizide Mittel bereitzustellen, welche eine besonders hohe herbizide Wirkung aufweisen.

Überraschenderweise wurde nun gefunden, daß herbizide Mittel, die Herbizide vom Hydroxybenzonitril-Typ der nachstehend genannten Formel (I) in Kombination mit speziellen Tensiden enthalten, diese Aufgabe erfüllen.

Die vorliegende Erfindung betrifft somit herbizide Mittel, enthaltend
A) eine oder mehrere Verbindungen der Formel (I) 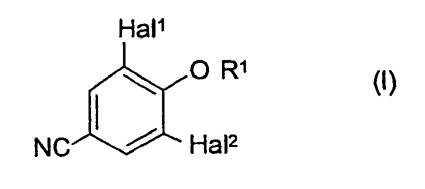
   worin
   - Hal¹ und Hal²: gleiche oder voneinander verschiedene Halogenatome

   wie F, Cl, Br, I, bevorzugt Br oder I sind, und
   - R¹ H,: ein Kation oder ein C₁-C₂₀-kohlenstoffhaltiger Rest bedeutet, und

   wobei die Verbindung(en) in Mikrokapseln aus Polymeren Materialien synthetischer und/oder natürlicher Herkunft eingebracht sind, sowie
B) ein oder mehrere Tenside enthaltend als Strukturelement mindestens 12 Alkylenoxideinheiten, vorzugsweise 12 - 200 Alkylenoxideinheiten.

Formulierungen enthaltend eine Verbindung der Formel (I) und ein Tensid B) sind in DD-A-268147 beschrieben.

Bevorzugte Verbindungen der Formel (I) sind Verbindungen, in denen R¹ gleich H, ein C₁C₂₀-kohlenstoffhaltiger Rest, z.B. C₁-C₂₀-Acylrest, oder ein Kation wie ein Ammoniumion, z.B. ^{⊕}NH₄, ^{⊕}NH₃CH₂CH₂OH , ^{⊕}NH₂ (CH₂CH₂OH)₂, ^{⊕}NH(CH₂CH₂OH)₃ , ^{⊕}N (CH₂CH₂OH)₄, ^{⊕}NH₃(C₁-C₁₈)-Alkyl, ^{⊕}NH₂[(C₁-C₁₈)-Alkyl]₂, ^{⊕}NH[(C-C₁₈)-Alkyl]₃ oder ^{⊕}N [(C₁-C₁₈)-Alkyl]₄, ein Sulfoniumion, z.B. ^{⊕}S [(C₁-C₆)-Alkyl]₃, ein Phosphoniumion z.B. ^{⊕}P[(C₁-C₆)-Alkyl]₄, ein Alkalimetallion, z.B. Na^{⊕} oder K^{⊕} oder ein Erdalkalimetallion z.B. ½ Ca^{2⊕} oder^{½} Mg^{2⊕} oder ein Nebengruppenmetallion z.B. ½ Zn^{2⊕} ist.

Ein C₁-C₂₀-kohlenstoffhaltiger Rest R¹ kann unsubstituiert oder substituiert, linear verzweigt oder cyclisch, gesättigt oder ungesättigt, aliphatisch oder (hetero)aromatisch sein. Als Substituenten kommen z.B. ein oder mehrere Reste aus der Gruppe Oxo (=O), OH, (C₁-C₆)-(Halo)-Alkyl oder Halogen (F, Cl, Br, I) in Betracht. Bevorzugt ist R¹ ein kohlenstoffhaltiger Acylrest, wie (C₁-C₁₉)-Alkylcarbonyl, vorzugsweise (C₁-C₁₀)-Alkylcarbonyl wie Propylcarbonyl (Butyrat), Hexylcarbonyl (Heptanoat) oder Heptylcarbonyl (Octanoat).

Bevorzugt sind außerdem Verbindungen der Formel (I), worin Hal¹ und Hal² gleiche Halogenatome sind, insbesondere Br oder I.

Von der Formel (I) umfaßt sind auch alle Stereoisomeren, welche die gleiche topologische Verknüpfung der Atome aufweisen, und deren Gemische. Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-Isomere und Tautomere, können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Verbindungen der allgemeinen Formel (I) sind z. B. aus C. D. S. Tomlin, "The Pesticide Manual", 12. Auflage (1999), The British Crop Protection Council, (ISBN 19 01 39 61 26); S. 110ff und S. 548ff bekannt.

Besonders bevorzugte Verbindungen der Formel (I) sind z.B. Bromoxynil (A1) und loxynil (A5) und deren Salze und Ester wie Bromoxynil-Natrium (A2), Bromoxynil-Kalium (A3), Bromoxynil-heptylcarbonyl (= Bromoxynil-octanoat) (A4), loxynil-Natrium (A6), loxynil-Kalium (A7), loxynil-heptylcarbonyl (= loxynil-octanoat) (A8), Bromoxynil-hexylcarbonyl (= Bromoxynil-heptanoat) (A9), Bromoxynil-propylcarbonyl (= Bromoxynil-butyrat) (A10), loxynil-hexylcarbonyl (=loxynil-heptanoat) (A11) und loxynil-propylcarbonyl (=loxynil-butyrat) (A12) sowie deren Gemische.

Das Tensid B) enthält bevorzugt 12 - 200 Alkylenoxideinheiten, einen oder mehrere C₁-C₄₀ - kohlenstoffhaltige Reste und gegebenenfalls eine oder mehrere polare funktionelle Gruppen.

Unter dem Begriff Alkylenoxideinheiten werden vorzugsweise Einheiten von C₂-C₁₀₋Alkylenoxiden, wie Ethylenoxid, Propylenoxid, Butylenoxid oder Hexylenoxid verstanden, wobei die Einheiten innerhalb des Tensids gleich oder voneinander verschieden sein können.

Als polare funktionelle Gruppen kommen z. B. in Frage anionische Gruppen wie Carboxylat, Carbonat, Sulfat, Sulfonat, Phosphat oder Phosphonat, kationische Gruppen wie Gruppen mit einem kationischen Stickstoffatom, z. B. eine Pyridinium-Gruppe oder eine -NR^{Y}₃-Gruppe, worin R^{Y} gleich oder verschieden H oder ein unsubstituierter oder substituierter C₁-C₁₀ - Kohlenwasserstoffrest wie (C₁-C₁₀)-Alkyl ist, elektrisch neutrale, polare Gruppen wie Carbonyl, Imin, Cyano oder Sulfonyl, oder betainische Gruppen wie 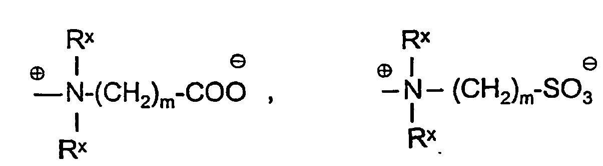 oder 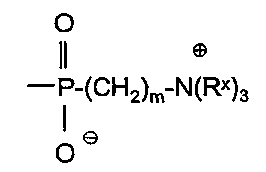
worin m = 1,2,3,4 oder 5 ist und R^{x} gleich oder verschieden unsubstituierte oder substituierte C₁ - C₁₀ - Kohlenwasserstoffreste wie (C₁-C₁₀)- Alkyl sind.

Vorzugsweise enthält das erfindungsgemäße Mittel als Komponente B) eines oder mehrere Tenside der allgemeinen Formel (II)

R^{γ}-(EO)ₓ (PO)_{y} (EO)_{z}-R^{δ} (II)

worin
- EO: eine Ethylenoxideinheit bedeutet,
- PO: eine Propylenoxideinheit bedeutet,
- x: eine ganze Zahl von 0 bis 50, vorzugsweise 1 bis 50 bedeutet,
- y: eine ganze Zahl von 0 bis 50 bedeutet,
- z: eine ganze Zahl von 0 bis 50 bedeutet,

wobei die Summe (x+y+z) ≥ 12 und ≤ 150 ist, und
- R^{γ}: OH, einen unsubstituierten oder substituierten C₁-C₄₀₋Kohlenwasserstoffoxyrest, einen O-Acylrest wie O-COR^{I}, O-CO-OR^{I}, O-CO-NR^{I}R^{II}, O-P(O)(R^{I})[(EO)ᵤ(OR^{II})] oder O-P(O)[(EO)ᵤ(OR^{I})][(EO)ᵥ(OR^{II})] oder NR^{I}R^{II} oder [NR^{I}R^{II}R^{III}]^{⊕}X^{⊖} bedeuten, worin R^{I}, R^{II} und R^{III} gleich oder verschieden H oder einen unsubstituierten oder substituierten C₁-C₃₀₋Kohlenwasserstoffrest bedeuten, der optional über eine Gruppe (EO)_{w}, worin w eine ganze Zahl von 1 bis 50 ist, gebunden sein kann, X^{⊖} ein Anion, ist (z.B. das Anion einer organischen Säure wie ein Carbonsäureanion z.B. Acetat oder Lactat, oder das Anion einer anorganischen Säure wie ½ Sulfat, [O-SO₃₋CH₃]^{⊖}, Sulfonat, 1/3 Phosphat, Phosphonat oder Halogenid wie Cl^{⊖} oder Br^{⊖}), und u, v unabhängig voneinander eine ganze Zahl von 0 bis 50 bedeuten, und
- R^{δ}: H, einen unsubstituierten oder substituierten C₁-C₄₀-Kohlenwasserstoffrest, einen Acylrest wie COR^{I}, CO-OR^{I}, CO-NR^{I}R^{II}, P(O)(R^{I})[(EO)ᵤ(OR^{II})] oder P(O)[(EO)ᵤ(OR^{I})][(EO)ᵥ(OR^{II})] oder NR^{I}R^{II} oder [NR^{I}R^{II}R^{III}]^{⊕}X^{⊖} bedeuten, worin R^{I}, R^{II} und R^{III} gleich oder verschieden H oder einen unsubstituierten oder substituierten C₁-C₃₀-Kohlenwasserstoffrest bedeuten, der optional über eine Gruppe (EO)_{w}, worin w eine ganze Zahl von 1 bis 50 ist, gebunden sein kann, X^{⊖} ein Anion ist (z. B. das Anion einer organischen Säure wie ein Carbonsäureanion z. B. Acetat oder Lactat, oder das Anion einer anorganischen Säure wie ½ Sulfat, [O-SO₃-CH₃]^{⊖} , Sulfonat, 1/3 Phosphat, Phosphonat oder Halogenid wie Cl^{⊖} oder Br^{⊖}), und u, v unabhängig voneinander eine ganze Zahl von 0 bis 50 bedeuten.

Die Abkürzungen EO und PO in Formel (II) bedeuten eine Ethylenoxideinheit bzw. eine Propylenoxideinheit, auch soweit sie an anderen Stellen der Beschreibung verwendet werden.

Bevorzugt sind Tenside der Formel (II), worin die Summe (x+y+z) ≥ 12und ≤ 150, bevorzugt 12 - 100, besonders bevorzugt 12 - 80 ist, und
- R^{γ}: OH, einen unsubstituierten oder substituierten C₁-C₃₀-, vorzugsweise C₄₋C₃₀- Kohlenwasserstoffoxyrest wie einen C₈-, C₁₀-, C₁₂-, C₁₃-(Z. B. isotridecyl), C₁₄-, C₁₆-, C₁₈-, C₂₀- Alkoxyrest, -Alkenyloxyrest oder-Alkinyloxyrest, oder einen unsubstituierten oder substituierten, z. B. ein- oder mehrfach durch (C₁₋C₂₀)-Alkyl oder (C₇-C₂₀)-Arytalkyl wie Styryl substituierten C₆-C₁₄-Aryloxyrest wie p-Octylphenoxy, p-Nonylphenoxy, 2,4-Dibutylphenoxy, 2,4,6-Tri-isobutylphenoxy, 2,4,6-Tri-n-butylphenoxy, 2,4,6-Tri-sec-butylphenoxy oder mono-, di- oder tristyrylphenyl bedeutet, oder R^{γ} O-CO-R^{I}, O-COOR^{I}, NR^{I}R^{II} oder [NR^{I}R^{II}R^{III}]^{⊕} X^{⊖} bedeutet, worin R^{I}, R^{II} und R^{III} gleich oder verschieden H, einen unsubstituierten oder substituierten C₁-C₃₀-, vorzugsweise C₄- C₂₀₋Kohlenwasserstoffrest wie einen C₈-, C₁₀-, C₁₂-, C₁₃- (z. B. isotridecyl), C₁₄-, C₁₆-, C₁₈-, C₂₀- Alkylrest, -Alkenylrest oder -Alkinylrest, oder einen unsubstituierten oder substituierten, z. B. ein -oder mehrfach durch (C₁-C₂₀)-Alkyl oder (C₇-C₂₀)-Arylalkyl wie Styryl substituierten C₆-C₁₄-Arylrest wie p-Octylphenyl, p-Nonylphenyl, 2,4-Dibutylphenyl, 2,4,6-tri-isobutylphenyl, 2,4,6-tri-n-butylphenyl, 2,4,6-tri-sec-butylphenyl oder mono-, di- oder tristyrylphenyl bedeuten,
oder R^{I}, R^{II} und R^{III} gleich oder verschieden (EO)_{w}-R^{IV} sind, worin R^{IV} H oder ein unsubstituierter oder substituierter C₁-C₂₀-Kohlenwasserstoffrest ist wie ein C₈-, C₁₀-, C₁₂-, C₁₃- (z.B. isotridecyl), C₁₄-, C₁₆-, C₁₈-, C₂₀- Alkylrest, -Alkenylrest oder -Alkinylrest, oder einen unsubstituierten oder substituierten, z. B. ein-oder mehrfach durch (C₁-C₂₀)-Alkyl oder (C₇-C₂₀)-Arylalkyl wie Styryl substituierten C₆-C₁₄ Arylrest wie p-Octylphenyl, p-Nonylphenyl, 2,4-Dibutylphenyl, 2,4,6-tri-isobutylphenyl, 2,4,6-tri-n-butylphenyl, 2,4,6-tri-sec-butylphenyl oder mono-, di- oder tristyrylphenyl und w eine ganze Zahl von 1 bis 50 bedeutet, und X^{⊖} ein Anion ist, und
- R^{δ}: H, einen unsubstituierten oder substituierten C₁-C₃₀-Kohlenwasserstoffrest, vorzugsweise C₁-C₂₀- Kohlenwasserstoffrest wie einen C₁-, C₂-, C₃-, C₄-, -C₅-, C₆-, C₈-, C₁₀-, C₁₂-, C₁₃- (z.B. isotridecyl), C₁₄-, C₁₆-, C₁₈-, C₂₀- Alkylrest,-Alkenylrest oder -Alkinylrest, oder einen unsubstituierten oder substituierten, z.B. ein- oder mehrfach durch (C₁-C₂₀)-Alkyl oder (C₇-C₂₀)-Arylalkyl wie Styryl substituierten C₆ -C₁₄- Arylrest wie p-Octylphenyl, p-Nonylphenyl, 2,4-Dibutylphenyl, 2,4,6-Tri-isobutylphenyl, 2,4,6-Tri-n-butylphenyl, 2,4,6-Tri-sec-butylphenyl oder mono-, di- oder tristyrylphenyl bedeutet, oder R^{δ} CO-R^{I} g COOR^{I}, NR^{I} R^{II} oder [NR^{I}R^{II}R^{III}]^{⊕} X^{⊖} bedeutet, worin R^{I} , R^{II} und R^{III} gleich oder verschieden H, einen unsubstituierten oder substituierten C₁-C₃₀₋Kohlenwasserstoffrest, wie einen C₁-, C₂-, C₃-, C₄-, C₅-, C₆-, C₈-, C₁₀-, C₁₂-, C₁₃- (z. B. isotridecyl), C₁₄-, C₁₆-, C₁₈-, C₂₀- Alkylrest, -Alkenylrest oder-Alkinylrest, oder einen unsubstituierten oder substituierten, z. B. ein- oder mehrfach durch (C₁-C₂₀)-Alkyl oder (C₇-C₂₀)-Arylalkyl wie Styryl substituierten C₆-C₁₄- Arylrest wie p-Octylphenyl, p-Nonylphenyl, 2,4-Dibutylphenyl, 2,4,6-tri-isobutylphenyl, 2,4,6-tri-n-butylphenyl, 2,4,6-tri-sec-butylphenyl oder mono-, di- oder tristyrylphenyl bedeuten, oder R^{I}, R^{II} und R^{III} gleich oder verschieden (EO)_{w}-R^{IV} sind, worin R^{IV} H oder ein unsubstituierter oder substituierter C₁₋C₃₀-, vorzugsweise C₁-C₂₀-Kohlenwasserstoffrest ist wie ein C₁-, C₂, C₃-, C₄-, C₅-, C₆-, C₈-, C₁₀-, C₁₂-, C₁₃- (z.B. isotridecyl), C₁₄-, C₁₆-, C₁₈-, C₂₀- Alkylrest, -Alkenylrest oder-Alkinylrest, oder einen unsubstituierten oder substituierten, z.B. ein- oder mehrfach durch (C₁-C₂₀)-Alkyl oder (C₇-C₂₀)-Arylalkyl wie Styryl substituierten C₆-C₁₄- Arylrest wie p-Octylphenyl, p-Nonylphenyl, 2,4-Dibutylphenyl, 2,4,6-tri-isobutylphenyl, 2,4,6-tri-n-butylphenyl, 2,4,6-tri-sec-butylphenyl oder mono-, di- oder tristyrylphenyl und w eine ganze Zahl von 1 bis 50 bedeutet, und X^{⊖} ein Anion ist.

Bevorzugte Tenside B) sind Tenside mit den nachfolgenden Formeln B1 - B3,
B1) (C₈-C₃₀)Alkyl-O-(EO)ₓ(PO)_{y}-R²
B2) (C₈-C₃₀)Alkyl-CO-O-(EO)ₓ(PO)_{y}-CO-(C₈-C₃₀)Alkyl
B3) Ar-O-(EO)ₓ(PO)_{y}-R³

wobei
- R²: H, CO-(C₁-C₁₇)-Alkyl, (C₁-C₁₈)-Alkyl, SO^{3⊖} , p(O)O₂^{2⊖}, [(C₈ - C₃₀)-Alkyl - O - (EO)ₓ-(PO)₄] - P(O) - O^{⊖}, [C₈ - C₃₀)-Alkyl - O (EO)ₓ(PO)₄]₂-P-O^{⊖},
- R³: H, CO-(C₁-C₁₇)-Alkyl, (C₁-C₁₈)-Alkyl, SO₃^{⊖}, P(O)O₂^{2⊖}, [Ar-O-(EO)ₓ(PO)_{y}]P(O)O^{⊖}, [Ar-O-(EO)ₓ(PO)_{y}]₂P(O),
- x: eine ganze Zahl von 0 bis 50, y eine ganze Zahl von 0 bis 50 und x + y eine ganze Zahl ≥12 und ≤ 100 ist, und
- Ar: ein unsubstituierter oder substituierter Arylrest wie unsubstituiertes oder substituiertes Phenyl, z.B. mono-, di-, tri-, tetra- oder penta- (C₁-C₁₀)-Alkylphenyl, vorzugsweise di- und tri-butyl-phenyl wie di- und tri-n-butyl-phenyl, -sec-butyl-phenyl, -iso-butyl-phenyl und -tert.-butyl-phenyl, sowie mono-, di- oder tristyrylphenyl bedeutet.

Besonders bevorzugt sind Tenside der Formel (II), worin die Summe (x+y+z) gleich 15 - 80, bevorzugt 20 - 50 ist,
- R^{γ}: (C₈-C₁₈)-Alkoxy, (C₈₋C₁₈)-Alkenyloxy oder (C₈-C₁₈) -Alkinyloxy, (C₇-C₁₇)-Alkylcarbonyloxy, (C₇-C₁₇)-Alkenylcarbonyloxy, (C₇-C₁₇)-Alkinylcarbonyloxy. (C₁₋C₁₀)-Alkylphenoxy wie Octylphenoxy, p-Nonylphenoxy, 2,4,6-Tri-n-butylphenoxy, 2,4,6-Tri-Iso-Butylphenoxy oder 2,4,6-tri-sec-butylphenoxy oder (C₇-C₂₀)-Arylalkylphenoxy wie mono-, di- oder tristyrylphenoxy, und
- R^{δ}: H, (C₁-C₁₈)-, bevorzugt (C₁-C₆)-Alkyl, (C₂-C₁₈)-, bevorzugt (C₂-C₆)- Alkenyl oder (C₂-C₁₈)-, bevorzugt (C₂-C₆)-Alkinyl, CO-H, CO-(C₁-C₁₇)-Alkyl, CO-(C₂-C₁₇)-Alkenyl oder CO-(C₂-C₁₇)-Alkinyl ist

Tenside B), z. B. der Formel (II) sind literaturbekannt, z. B. aus McCutcheon's, Emulsifiers&Detergents 1994, Vol. 1: North American Edition und Vol. 2, International Edition; McCutcheon Division, Glen Rock NJ, USA sowie aus "Surfactants in Consumer Products", J. Falbe, Springer-Verlag Bedin, 1987. Die hierin genannten Tenside B) sind durch Bezugnahme Bestandteil dieser Beschreibung. Außerdem sind Tenside B), z. B. der Formel (II) auch kommerziell erhältlich, z. B. unter den Markennamen Genapol® X oder O oder T-Reihe, Sapogenat® T-Reihe, Arkopal® N-Reihe, Afilan® PTU, Hordaphos® und Emulsogen®-Reihe von Clarlant AG; Agrilan®-Typen von Akcros Organics; Alkamul® und Antarox®-Typen von Rhodia; Emulan® Typen (NP, OC, OG, OK) von BASF AG; Dehydol® -Typen von Henkel; Agent W®-Typen von Stepan Company; Crodamel®-Typen von Croda GmbH.

Beispiele für Tenside B), z. B. der Formel (II) sind in der nachfolgenden Tabelle 1. aufgeführt:

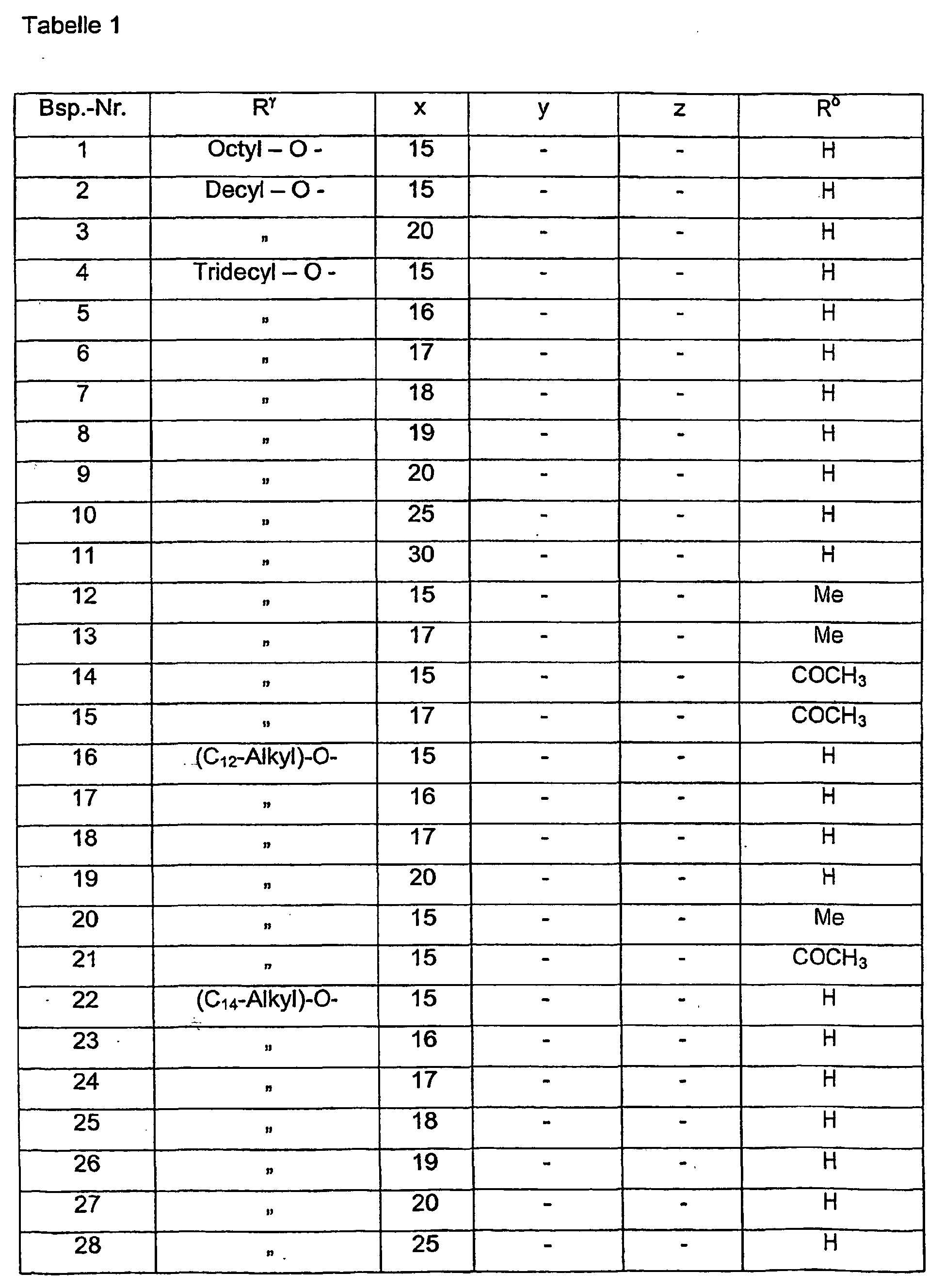

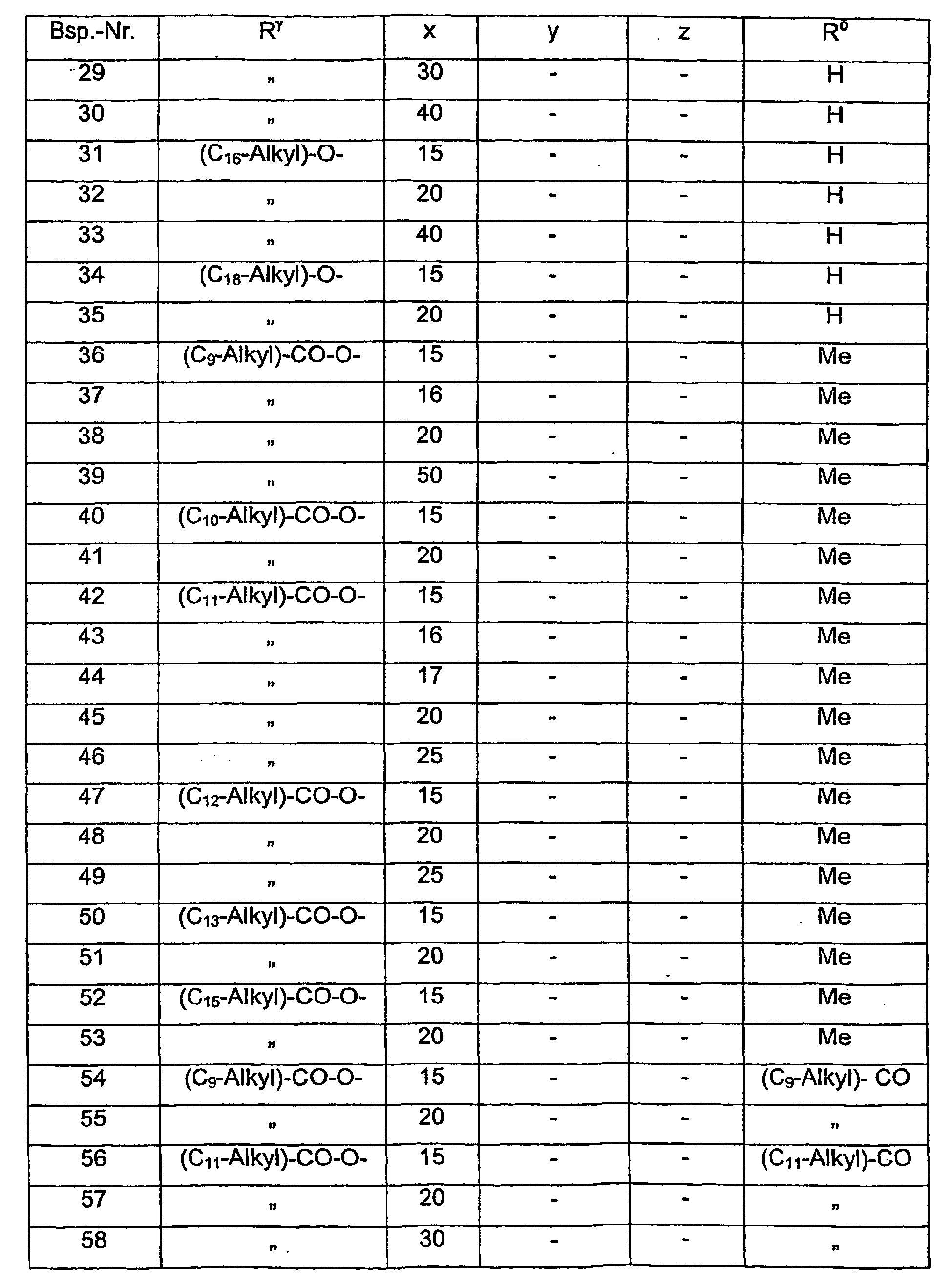

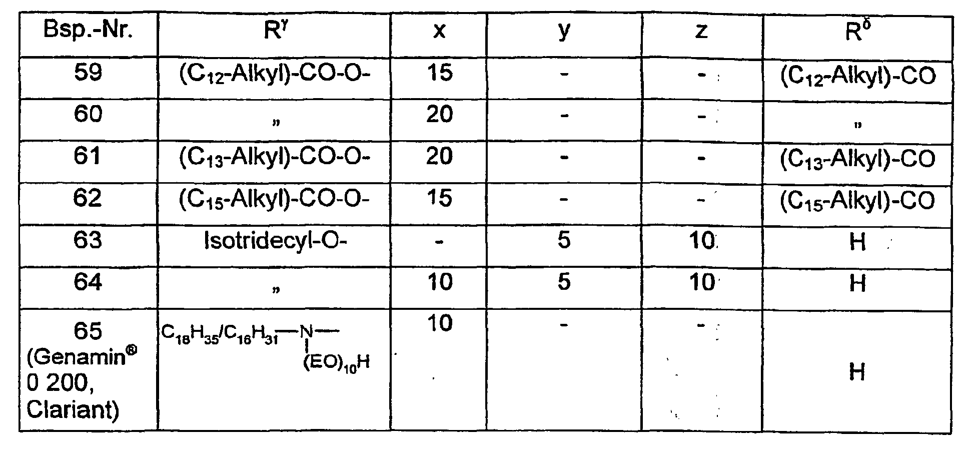

Sofern es im einzelnen nicht anders definiert wird, gelten für die Reste in den Formeln zu (I) und (II) und nachfolgenden Formeln im allgemeinen die folgenden Definitionen.
Soweit in dieser Beschreibung der Begriff Acylrest verwendet wird, bedeutet dieser den Rest einer organischen Säure, der formal durch Abspaltung einer OH-Gruppe aus der organischen Säure entsteht, z. B. der Rest einer Carbonsäure und Reste davon abgeleiteter Säuren wie der Thiocarbonsäure, gegebenenfalls N-substituierten Iminocarbonsäuren oder die Reste von Kohlensäuremonoestern, gegebenenfalls N-substituierter Carbaminsäuren, Sulfonsäuren, Sulfinsäuren, Phosphonsäuren, Phosphinsäuren.
Ein Acylrest ist bevorzugt Formyl oder Acyl aus der Gruppe CO-R^{z}, CS-R^{z}, CO-OR^{z}, CS-OR^{z}, CS-SR^{z}, SOR^{z} oder SO₂R^{z}, wobei R^{z} jeweils einen C₁-C₁₀₋Kohlenwasserstoffrest wie C₁-C₁₀-Alkyl oder C₆-C₁₀-Aryl bedeuten, der unsubstituiert oder substituiert ist, z. B. durch einen oder mehrere Substituenten aus der Gruppe Halogen wie F, Cl, Br, I, Alkoxy, Haloalkoxy, Hydroxy, Amino, Nitro, Cyano oder Alkylthio, oder R^{z} bedeutet Aminocarbonyl oder Aminosulfonyl, wobei die beiden letztgenannten Reste unsubstituiert, N-monosubstituiert oder N,N-disubstituiert sind, z. B. durch Substituenten aus der Gruppe Alkyl oder Aryl.
Acyl bedeutet beispielsweise Formyl, Halogenalkylcarbonyl, Alkylcarbonyl wie (C₁-C₁₀)-Alkylcarbonyl, Phenylcarbonyl, wobei der Phenylring substituiert sein kann, oder Alkyloxycarbonyl, wie (C₁-C₄)-Alkyloxycarbonyl, Phenyloxycarbonyl, Benzyloxycarbonyl, Alkylsulfonyl, wie (C₁-C₄)-Alkylsulfonyl, Alkylsulfinyl, wie (C₁-C₄)-Alkylsulfinyl, N-Alkyl-1-iminoalkyl, wie N-(C₁-C₄)-Alkyl-imino-(C₁-C₄)-alkyl und andere Reste von organischen Säuren.

Kohlenstoffhaltige Reste sind organische Reste, die mindestens ein Kohlenstoffatom, vorzugsweise 1 bis 40 C-Atome, besonders bevorzugt 1 bis 30 C-Atome, ganz besonders bevorzugt 1 bis 20 C-Atome und außerdem mindestens ein Atom eines oder mehrerer anderer Elemente des Periodensystems der Elemente wie H, Si, N, P, O, S, F, Cl, Br oder I enthalten. Beispiele für kohlenstoffhaltige Reste sind unsubstituierte oder substituierte Kohlenwasserstoffreste, die direkt oder über ein Heteroatom wie Si, N, S, P oder O an den Grundkörper gebunden sein können, unsubstituierte oder substituierte Heterocyclylreste, die direkt oder über ein Heteroatom wie Si, N, S, P oder O an den Grundkörper gebunden sein können, kohlenstoffhaltige Acylreste oder Cyano.
Unter dem Begriff Heteroatom werden von Kohlenstoff und Wasserstoff verschiedene Elemente des Periodensystems der Elemente verstanden, z. B. Si, N, S, P, O, F, Cl, Br oder I.

Kohlenwasserstoff(oxy)reste sind geradkettige, verzweigte oder cyclische und gesättigte oder ungesättigte aliphatische oder aromatische Kohlenwasserstoff(oxy)reste, z. B. Alkyl, Alkenyl, Alkinyl oder carbocyclische Ringe wie Cycloalkyl, Cycloalkenyl oder Aryl und die diesen Kohlenwasserstoffresten entsprechenden Kohlenwasserstoffoxyreste wie Alkoxy, Alkenyloxy, Alkinyloxy, Cycloalkoxy, Cycloalkenyloxy oder Aryloxy; Aryl bedeutet dabei ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl; vorzugsweise bedeutet ein Kohlenwasserstoffrest Alkyl, Alkenyl oder Alkinyl mit 1 bis 30 C-Atomen oder Cycloalkyl mit 3, 4, 5, 6 oder 7 Ringatomen oder Phenyl.

Substituierte Reste, wie substituierte Kohlenwasserstoff(oxy)reste, z. B. substituiertes Alkyl, Alkenyl, Alkinyl oder carbocyclische Ringe wie Cycloalkyl, Cycloalkenyl oder Aryl, und die diesen Kohlenwasserstoffresten entsprechenden Kohlenwasserstoffoxyreste wie Alkoxy, Alkenyloxy, Alkinyloxy, Cycloalkoxy, Cycloalkenyloxy oder Phenoxy, oder substituierte Heterocyclylreste, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch unsubstituiertes oder substituiertes Alkyl wie Haloalkyl, Alkoxyalkyl, Haloalkoxyalkyl, Alkylthioalkyl, Hydroxyalkyl, Aminoalkyl, Nitroalkyl, Carboxyalkyl, Cyanoalkyl oder Azidoalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)-Alkyl, vorzugsweise Methyl oder Ethyl, (C₁-C₄)-Haloalkyl, vorzugsweise Trifluormethyl, (C₁-C₄)-Alkoxy, vorzugsweise Methoxy oder Ethoxy, (C₁-C₄)-Haloalkoxy, Nitro und Cyano. Besonders bevorzugt sind dabei die Substituenten Methyl, Methoxy und Chlor.

Die kohlenstoffhaltigen Reste wie Alkyl, Alkoxy, Haloalkyl, Haloalkoxy, Alkylamino und Alkylthio sowie die entsprechenden ungesättigten und/oder substituierten Reste im Kohlenstoffgerüst jeweils geradkettig oder verzweigt sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z. B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z. B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z. B. Propargyl, But-2-in-1-yl, But-3-in-1-yl, 1-Methyl-but-3-in-1-yl.

Cycloalkyl bedeutet bevorzugt einen cyclischen Alkylrest mit 3 bis 8, vorzugsweise 3 bis 7, besonders bevorzugt 3 bis 6 C-Atomen, beispielsweise Cyclopropyl, Cyclobutyl, Cyclopentyl und Cyclohexyl. Cycloalkenyl und Cycloalkinyl bezeichnen entsprechende ungesättigte Verbindungen.

Halogen bedeutet Fluor, Chlor, Brom oder lod. Haloalkyl, Haloalkenyl und Haloalkinyl bedeuten durch Halogen, vorzugsweise durch Fluor, Chlor und/oder Brom, insbesondere durch Fluor oder Chlor, teilweise oder vollständig substituiertes Alkyl, Alkenyl oder Alkinyl, z. B. CF₃, CHF₂, CH₂F, CF₃CF₂, CH₂FCHCl, CCl₃, CHCl₂, CH₂CH₂Cl. Haloalkoxy ist z. B. OCF₃, OCHF₂, OCH₂F, CF₃CF₂O, OCH₂CF₃ und OCH₂CH₂Cl. Entsprechendes gilt für sonstige Halogen substituierte Reste.

Ein Kohlenwasserstoffrest kann ein aromatischer Kohlenstoffwasserstoffrest wie Aryl oder ein aliphatischer Kohlenwasserstoffrest sein, wobei ein aliphatischer Kohlenwasserstoffrest im allgemeinen ein geradkettiger oder verzweigter gesättigter oder ungesättigter Kohlenwasserstoffrest ist, vorzugsweise mit 1 bis 18, besonders bevorzugt 1 bis 12 C-Atomen, z. B. Alkyl, Alkenyl oder Alkinyl.

Vorzugsweise bedeutet aliphatischer Kohlenwasserstoffrest Alkyl, Alkenyl oder Alkinyl mit bis zu 12 C-Atomen; entsprechendes gilt für einen aliphatischen Kohlenwasserstoffrest in einem Kohlenwasserstoffoxyrest.

Ein Ring bedeutet ein carbocylisches oder heterocyclisches mono-, bi-oder polycyclisches unsubstituiertes oder substituiertes Ringsystem, das gesättigt, ungesättigt oder aromatisch ist. Beispiele für carbocyclische Ringe sind Aryl, Cycloalkyl oder Cycloalkenyl.

Aryl ist im allgemeinen ein mono-, bi- oder polycyclischer aromatischer Kohlenwasserstoffrest mit vorzugsweise 6-20 C-Atomen, bevorzugt 6 bis 14 C-Atomen, besonders bevorzugt 6 bis 10 C-Atomen, an den mono-, bi-oder polycyclisches, unsubstituiertes oder substituiertes aromatisches Heterocyclyl oder mono-, bi-oder polycyclisches, unsubstituiertes oder substituiertes gesättigtes oder ungesättigtes Carbocyclyl, z. B. Cycloalkyl oder Cycloalkenyl, oder mono-, bi-oder polycyclisches, unsubstituiertes oder substituiertes gesättigtes oder ungesättigtes Heterocyclyl annelliert sein kann. Beispiele für Arylreste sind Phenyl, Naphthyl, Tetrahydronaphthyl, Indenyl, Indanyl, Pentalenyl und Fluorenyl, besonders bevorzugt Phenyl.

Heterocyclischer Ring, heterocyclischer Rest oder Heterocyclyl bedeutet ein mono-, bi- oder polycyclisches unsubstituiertes oder substituiertes Ringsystem, das gesättigt, ungesättigt und/oder aromatisch ist und eine oder mehrere, vorzugsweise 1 bis 4, Heteroatome, vorzugsweise aus der Gruppe N, S und O, enthält. Bevorzugt sind gesättigte Heterocyclen mit 3 bis 7 Ringatomen und einem oder zwei Heteroatomen aus der Gruppe N, O und S, wobei die Chalcogene nicht benachbart sind. Besonders bevorzugt sind monocyclische Ringe mit 3 bis 7 Ringatomen und einem Heteroatom aus der Gruppe N, O und S, sowie Morpholin, Dioxolan, Piperazin, Imidazolin und Oxazolidin. Ganz besonders bevorzugte gesättigte Heterocyclen sind Oxiran, Pyrrolidon, Morpholin und Tetrahydrofuran.

Bevorzugt sind auch teilweise ungesättigte Heterocyclen mit 5 bis 7 Ringatomen und einem oder zwei Heteroatomen aus der Gruppe N, O und S. Besonders bevorzugt sind teilweise ungesättigte Heterocyclen mit 5 oder 6 Ringatomen und einem Heteroatom aus der Gruppe N, O und S. Ganz besonders bevorzugte teilweise ungesättigte Heterocyclen sind Pyrazolin, Imidazolin und Isoxazolin.

Ebenso bevorzugt ist Heteroaryl, z. B. mono- oder bicyclische aromatische Heterocyclen mit 5 oder 6 Ringatomen, die ein bis vier Heteroatome aus der Gruppe N, O, S enthalten, wobei die Chalcogene nicht benachbart sind. Besonders bevorzugt sind monocyclische aromatische Heterocyclen mit 5 oder 6 Ringatomen, die ein Heteroatom aus der Gruppe, N, O und S enthalten, sowie Pyrimidin, Pyrazin, Pyridazin, Oxazol, Thiazol, Thiadiazol, Oxadiazol, Pyrazol, Triazol und Isoxazol. Ganz besonders bevorzugt sind Pyrazol, Thiazol, Triazol und Furan.

Mono- oder disubstituiertes Amino bedeutet einen chemisch stabilen Rest aus der Gruppe der substituierten Aminoreste, welche beispielsweise durch einen bzw. zwei gleiche oder verschiedene Reste aus der Gruppe Alkyl, Alkoxy, Acyl und Aryl N-substituiert sind; vorzugsweise Monoalkylamino, Dialkylamino, Acylamino, Arylamino, N-Alkyl-N-arylamino sowie N-Heterocyclen; dabei sind Alkylreste mit 1 bis 4 C-Atomen bevorzugt; Aryl ist dabei vorzugsweise Phenyl oder substituiertes Phenyl; für Acyl gilt dabei die weiter unten genannte Definition, vorzugsweise Formyl, (C₁-C₄)-Alkylcarbonyl oder (C₁-C₄)-Alkylsulfonyl. Entsprechenes gilt für substituiertes Hydroxylamino oder Hydrazino.

Gegebenenfalls substituiertes Phenyl ist vorzugsweise Phenyl, das unsubstituiert oder ein- oder mehrfach, vorzugsweise bis zu dreifach, bei Halogen wie Cl und F auch bis zu fünffach, durch gleiche oder verschiedene Reste aus der Gruppe Halogen, (C₁-C₄)-Alkyl, (C₁-C₄)-Alkoxy, (C₁-C₄)-Haloalkyl, (C₁-C₄)-Haloalkoxy und Nitro substituiert ist, z. B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Die erfindungsgemäßen herbiziden Mittel, enthaltend Verbindungen der Formel (I) und Tenside B), zeigen eine ausgezeichnete herbizide Wirkung und in einer bevorzugten Ausführungsform überadditive Effekte. Aufgrund der verbesserten Kontrolle der Schadpflanzen durch die erfindungsgemäßen herbiziden Mittel wird es möglich, die Aufwandmenge zu senken und/oder die Sicherheitsmarge zu erhöhen. Beides ist sowohl ökonomisch als auch ökologisch sinnvoll. Die Wahl der von den Komponenten A) + B) einzusetzenden Mengen und das Verhältnis der Komponenten A): B) sind dabei von einer ganzen Reihe von Faktoren abhängig.

In bevorzugter Ausführungsform kennzeichnen sich erfindungsgemäße herbizide Mittel dadurch, daß sie einen synergistisch wirksamen Gehalt einer Kombination der Verbindungen der Formel (I) mit Tensiden B) aufweisen. Dabei ist vor allem hervorzuheben, daß selbst in Kombinationen mit Aufwandmengen oder Gewichtsverhältnissen von A): B) bei denen ein Synergismus nicht in jedem Falle ohne weiteres nachzuweisen ist - etwa weil die Einzelverbindungen üblicherweise in der Kombination in sehr unterschiedlichen Aufwandmengen eingesetzt werden oder auch weil die Kontrolle der Schadpflanzen bereits durch die Einzelverbindungen sehr gut ist- den herbiziden Mitteln der Erfindung in der Regel eine synergistische Wirkung inhärent ist.

Die Komponenten A) und B) der erfindungsgemäßen herbiziden Mittel können separat formuliert und im Tank-Misch-Verfahren appliziert werden, oder sie können zusammen in einer Fertigformulierung enthalten sein, die dann in üblicher Weise beispielsweise in Form einer Spritzbrühe appliziert werden kann.
Die erfindungsgemäßen herbiziden Mittel können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), wasserlösliche Pulver (SP), wasserlösliche Konzentrate (SL), emulgierbare Konzentrate (EC), Emulsionen (EW), wie Öl-in-Wasser- und Wasser-in-Öl-Emulsionen, versprühbare Lösungen, Suspensionskonzentrate (SC), Dispersionen auf Öl- oder Wasserbasis, ölmischbare Lösungen, Kapselsuspensionen (CS), Stäubemittel (DP), Granulate für die Streu- und Bodenapplikation, Granulate (GR) in Form von Mikro-, Sprüh-, Aufzugs- und Adsorptionsgranulaten, wasserdispergierbare Granulate (WG), wasserlösliche Granulate (SG), ULV-Formulierungen, Mikrokapseln und Wachse. Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986, Wade van Valkenburg, "Pesticide Formulations", Marcel Dekker, N.Y., 1973; K. Martens, "Spray Drying" Handbook, 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry", 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen, von der Komponente A) verschiedenen agrochemischen Wirkstoffen wie Insektiziden, Akariziden, Herbiziden, Fungiziden, Safenem, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff A) und / oder dem Tensid B) außer einem Verdünnungs- oder Inertstoff noch von Tensid B) verschiedene Tenside ionischer und/oder nichtionischer Art (Netzmittel, Dispergiermittel), z. B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe A) und / oder Tenside B) beispielsweise in üblichen Apparaturen wie Hammermühlen, Gebläsemühlen und Luftstrahlmühlen feingemahlen und gleichzeitig oder anschließend mit den Formulierungshilfsmitteln vermischt.

Emulgierbare Konzentrate werden durch Auflösen des Wirkstoffes A) und / oder des Tensids B) in einem organischen Lösungsmittel z. B. Butanol, Cyclohexanon, Dimethylformamid, Xylol oder auch höhersiedenden Aromaten oder Kohlenwasserstoffen oder Mischungen der organischen Lösungsmittel unter Zusatz von einem oder mehreren von Tensid B) verschiedenen Tensiden ionischer und/oder nichtionischer Art (Emulgatoren) hergestellt. Als Emulgatoren können beispielsweise verwendet werden: Alkylarylsulfonsaure Calzium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanester wie z. B. Sorbitanfettsäureester oder Polyoxethylensorbitanester wie z. B. Polyoxyethylensorbitanfettsäureester.

Wasserlösliche Konzentrate werden beispielsweise erhalten, indem der Wirkstoff A) und / oder das Tensid B) in Wasser oder in einem mit Wasser mischbaren Solvens gelöst wird und gegebenenfalls mit weiteren Hilfsstoffen wie wasserlöslichen Tensiden versetzt wird.

Stäubemittel erhält man durch Vermahlen des Wirkstoffes A) und / oder des Tensids B) mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls unter Zusatz von Tensid B) verschiedener Tenside, wie sie z. B. oben bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischem unter Verwendung von wäßrigen organischen Lösungsmitteln und gegebenenfalls von Tensid B) verschiedenen Tensiden, wie sie z.B. oben bei den anderen Formulierungstypen bereits aufgeführt sind, herstellen.

Granulate können entweder durch Verdüsen des Wirkstoffes A) und / oder Tensids B) auf adsorptionsfähiges, granuliertes Inertmaterial hergestellt werden oder durch Aufbringen von Wirkstoffkonzentraten mittels Klebemitteln, z. B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe A) und / oder Tenside B) in der für die Herstellung von Düngemittelgranulaten üblichen Weise - gewünschtenfalls in Mischung mit Düngemitteln - granuliert werden.

Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischem und Extrusion ohne festes Inertmaterial hergestellt.

Zur Herstellung von Teller-, Fließbett-, Extruder- und Sprühgranulaten siehe z. B. Verfahren in "Spray-Drying Handbook" 3rd ed. 1979, G. Goodwin Ltd., London; J.E. Browning, "Agglomeration", Chemical and Engineering 1967, Seiten 147 ff; "Perry^{I}s Chemical Engineer's Handbook", 5th Ed., McGraw-Hill, New York 1973, S. 8-57.

Für weitere Einzelheiten zur Formulierung von Pflanzenschutzmitteln siehe z. B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die erfindungsgemäßen herbiziden Mittel enthalten in der Regel 0,01 bis 99 Gew.-%, insbesondere 0,1 bis 95 Gew.-%, einer oder mehrerer Verbindungen der Formel (I).

In Spritzpulvern beträgt die Wirkstoffkonzentration z. B. etwa 10 bis 90 Gew.-%, der Rest zu 100 Gew.-% besteht aus üblichen Formulierungsbestandteilen und gegebenenfalls Tensiden B). Bei emulgierbaren Konzentraten kann die Wirkstoffkonzentration etwa 1 bis 90, vorzugsweise 5 bis 80 Gew.-% betragen. Staubförmige Formulierungen enthalten 1 bis 30 Gew.-% Wirkstoff, vorzugsweise meistens 5 bis 20 Gew.-% an Wirkstoff, versprühbare Lösungen enthalten etwa 0.05 bis 80, vorzugsweise 2 bis 50 Gew.-% Wirkstoff. Bei wasserdispergierbaren Granulaten hängt der Wirkstoffgehalt zum Teil davon ab, ob die wirksame Verbindung flüssig oder fest vorliegt und welche Granulierhilfsmittel, Füllstoffe usw. verwendet werden. Bei den in Wasser dispergierbaren Granulaten liegt der Gehalt an Wirkstoff beispielsweise zwischen 1 und 95 Gew.-%, vorzugsweise zwischen 10 und 80 Gew.-%.

Als weitere Formulierungsformen kommen z.B. Controlled-Release Formulierungen, insbesondere durch Einarbeitung der Wirkstoffe in Trägermaterialien in Betracht. Die Einarbeitung von Wirkstoffen in Trägermaterialien zum Bereitstellen von Formulierungen, die ein "controlled release" ermöglichen, ist im Prinzip bekannt und kann der Fachliteratur entnommen werden. Beispiele finden sich in C. L. Foy, D. W. Pritchard, "Pestizide Formulation and Technology", CRC Press, 1996, Seite 273 ff. und darin zitierte Literatur, und D. A. Knowles, "Chemistry and Technology of Agrochemical Formulations", Kluwer Academic Press, 1998, Seite 132 ff. und darin zitierte Literatur.

Die Trägermaterialien, die die Wirkstoffe umgeben oder umhüllen, sind dabei so gewählt, daß sie in einen geeigneten Temperaturbereich, vorzugsweise dem Bereich von etwa 0-50°C, fest sind. Unter festen Materialien werden dabei Materialien verstanden, die hart, wachsartig elastisch, amorph oder kristallin sind, aber nicht oder noch nicht im flüssigen Aggregatzustand vorliegen. Die Trägermaterialien können anorganischer oder organischer Natur und von synthetischer oder natürlicher Herkunft sein.

Eine Möglichkeit des Einbringens der agrochemischen Wirkstoffe in geeignete Trägermaterialien ist beispielsweise die Mikroverkapselung. Diese Mikrokapseln können aus polymeren Materialien synthetischer und/oder natürlicher Herkunft bestehen. Beispiele geeigneter Materialien umfassen Polyharnstoffe, Polyurethane, Polyamide, Melaminharze, Gelatine, Wachs und Stärke.

Mikrokapseln aus einigen dieser Materialien lassen sich beispielsweise nach der Methode der Grenzflächen-Polykondensation ("interfacial polycondensation") herstellen. Über die Menge an Monomeren, Wirkstoffmenge, Wasser- und Lösungsmittelmenge sowie Prozeßparameter lassen sich Partikelgröße und Wandstärke gut kontrollieren und somit auch die Freisetzungsgeschwindigkeiten.

Im Fall von Mikrokapseln aus Polyurethanen oder Polyharnstoffen besteht die gebräuchlichste Weise zum Aufbau der genannten Kapselwand um den zu umhüllenden Wirkstoff in einer Grenzphasenpolymerisation an Öl-in-Wasser Emulsionen, wobei die organische Phase neben dem Wirkstoff ein öllösliches Präpolymer mit freien Isocyanatgruppen enthält.

Als Präpolymer eignen sich die üblichen, einem Fachmann bekannten Isocyanate. Beispiele dafür umfassen 2,4-Toluylendiisocyanat, 2,6-Toluylendiisocyanat, 4,4'-Methylendi(phenylisocyanat) und Hexamethylendiisocyanat.
Die Polymerisation, also der Aufbau der Hülle der Mikrokapseln, wird generell nach den üblichen, einem Fachmann bekannten Methoden durchgeführt.

Das kapselbildende Material, aus dem die Hüllen der Mikrokapseln aufgebaut sind, wird vorzugsweise ausgehend von öllöslichen, Isocyanat-Gruppen enthaltenden Präpolymeren erhalten, bei welchen es sich um eine Gruppe technischer Mischprodukte handelt, die jeweils aus Polyisocyanaten auf Basis von Kondensaten aus Anilin und Formaldehyd bestehen. Diese technischen Mischprodukte unterscheiden sich voneinander im Kondensationsgrad und gegebenenfalls in chemischen Modifikationen. Wichtige Kenngrößen sind für den Anwender Viskosität und Gehalt an freien Isocyanatgruppen. Typische Verkaufsprodukte sind hier Desmodur®-Marken (Bayer AG) und Voranate®-Marken (Dow Chemicals). Es ist für die Erfindung wesentlich, daß die Einsatzmenge an Präpolymer mit Isocyanatgruppen ≤ 5 Gew.-% bezogen auf die Gesamtformulierung ist; bevorzugt werden 0,5 - 5 Gew.%, insbesondere 1-2 Gew.-%..

Das kapselbildende Material wird gebildet durch Aushärten des Isocyanat-Präpolymers entweder in Gegenwart von Wasser bei 0-95°C, vorzugsweise 20-65°C oder, vorzugsweise, mit der erforderlichen Menge eines Diamins.

Für den Fall, daß die Mikrokapseln unter Einbezug von Diaminen gebildet werden, kommen als solche beispielsweise Alkylendiamine, Dialkylentriamine und Trialkylentetramine in Frage, deren Kohlenstoffkette-Einheiten zwischen 2 und 8 Kohlenstoffatome enthalten. Bevorzugt wird Hexamethylendiamin. Dabei können entweder Mengen eingesetzt werden, die im stöchiometrischen Verhältnis zur verwendeten Menge an Isocyanat-Präpolymer stehen, oder vorzugsweise im bis zu dreifachen, insbesondere im bis zu zweifachen Überschuß.

In der Literatur finden sich weitere Methoden zur Herstellung von Mikrokapseln aus Polyurethanen oder Polyharnstoff, die ebenfalls für die Herstellung der erfindungsgemäßen Mikrokapseln geeignet sind. Diese werden nachfolgend aufgeführt.
In der US-A-3 577 515 wird beschrieben, wie nach Zugabe von wasserlöslichen Polyaminen die Tropfenoberfläche in solchen Emulsionen infolge der Addition an die Isocyanatgruppen enthaltenden Präpolymere aushärtet. Dabei entsteht eine Polyharnstoff-Außenhülle.

Aus der US-A-4 140 516 ist bekannt, daß man auch ohne externe wasserlösliche Amine Mikrokapseln mit einer Außenhaut vom Polyhamstofftyp erhalten kann, indem man in der Emulsion partielle Hydrolyse des Isocyanatfunktionen tragenden Präpolymers zuläßt. Dabei rekonstituiert sich ein Teil der Amino- aus den Isocyanatgruppen und es kommt durch interne Polyaddition mit nachfolgender Aushärtung ebenfalls die gewünschte Kapselhülle zustande. Es wird die Verwendung von Toluylendiisocyanat, Hexamethylendiisocyanat,

Methylendiphenyldiisocyanat und dessen höherer Homologe beschrieben. Falls mit einem externen Polyamin ausgehärtet werden soll, stammt dieses meist aus der Gruppe Ethylendiamin, Propylendiamin, Hexamethylendiamin, Diethylentriamin und Tetraethylenpentamin.

Die DE-A-2 757 017 offenbart innenstrukturierte Mikrokapseln, deren Wandmaterial die Natur eines gemischten Polymers hat, welches durch Harnstoff- und Urethan-Motive vernetzt ist. Im Inneren der Kapsel befindet sich der Wirkstoff gelöst in einem organischen Solvens. Typischerweise werden hier zum Aufbau der Kapselwand 10 % bezogen auf die Gesamtformulierung an Präpolymer benötigt.

Das gleiche Präpolymer wird auch nach der WO-A-96/09760 zur Verkapselung von z. B. Endosulfan eingesetzt.

Die WO-A-95/23506 offenbart mit Endosulfan beladene Polyharnstoff-Mikrokapseln, in denen der Wirkstoff als erkaltete Schmelze vorliegt. Als Präpolymer wird ein Gemisch aus Methylendiphenyldüsocyanat und dessen höheren Homologen beschrieben, die Einsatzmenge an Präpolymer bezogen auf die Gesamtformulierung beträgt über 6 %. Es wird mit einem Gemisch von Polyaminen ausgehärtet. Der Inhalt der oben aufgeführten Patente und Patentanmeldungen bezüglich der Materialien der Mikrokapselwand und der Herstellungsverfahren ist ein wichtiger und integraler Bestandteil der vorliegenden Erfindung und durch Referenz in die vorliegende Anmeldung einbezogen.

Eine weitere Möglichkeit der Verkapselung liegt in der Kapselbildung aus z. B. Melamin/Formaldehyd oder Harnstoff/Formaldehyd.

Hierzu wird Melamin bzw. die oben genannten Isocyanat-Präpolymeren in Wasser vorgelegt und mit dem wasserunlöslichen Wirkstoff versetzt. Dieser wurde zuvor dispergiert oder in einem wasserunlöslichen Solvenz gelöst und emulgiert. Durch Einstellen eines sauren pH-Werts von ca. 3-5, vorzugsweise ca. 3-4, und mehrstündigem Rühren bei erhöhter Temperatur zwischen 30 und 60°C, vorzugsweise 50°C, bildet sich die Kapselwand durch Polykondensation. Beispiele hierfür sind in der US 4,157,983 und der US 3,594,328 beschrieben.

Eine weitere geeignete Methode zur Mikroverkapselung der agrochemischen Wirkstoffe stellt auch die Coacervation dar. Hierzu wird der wasserunlösliche agrochemische Wirkstoff in Wasser dispergiert und mit einem anionischen, wasserlöslichen Polymer sowie einem kationischen Material versetzt. Die durch sogenannte Coacervation entstehenden Mikrokapseln mit dem ursprünglich wasserlöslichen Polymer als Wandmaterial sind wasserunlöslich. Im letzten Schritt wird die Kapsel dann durch Kondensationsreaktion mit Aldeyhden ausgehärtet. Beispielsweise eignet sich hierfür die Kombination Gelatine/Gummi arabicum (1:1) und Formaldehyd. Das Verfahren der Mikroverkapselung durch Coacervation ist einem Fachmann bekannt. Ausführlich wird die Methode beispielsweise von J. A. Bahan "Microencapsulation using Coacervation/Phase Separation Techniques, Controlled Released Technology: Methods Theory and Application", Vol. 2, Kydoniens, A. F, Ed. CRC Press, Inc., Boca Raton, FL. 1980, Chapter 4 beschrieben.
Schließlich kann zur Mikroverkapselung beispielsweise der Wirkstoff und das Polymer, das die Kapselwand bildet, in Wasser mit einem geeigneten Surfactant emulgiert werden. Dabei dürfen sich Polymer und Wirkstoff nicht ineinander lösen. Anschließend wird unter Rühren das Lösemittel verdampft. Beim Entfernen des Wassers bildet das Polymer eine Schicht um die Oberfläche des emulgierten Tropfens.

Ein anderes geeignetes Material zur Herstellung von Mikrokapseln ist Wachs. Dazu werden entweder selbstemulgierende Wachse in Wasser unter Scherung in der Wärme aufgelöst, oder durch Zugabe von Surfactants und Wärme unter Scherung in eine Emulsion überführt. Lipophile agrochemische Wirkstoffe lösen sich im geschmolzenen und emulgieren Wachs. Die Tropfen erstarren während des Abkühlens und bilden so die Wachsdispersion.

Alternativ können Wachsdispersionen hergestellt werden, indem Wirkstoff-Wachs-Extrusionsgranulate in Wasser oder Öl dispergiert und fein vermahlen werden, z. B. zu Partikelgrößen von < 20 µm.
Als Wachse eignen sich z.B. PEG 6000 im Gemisch mit nicht hydrophilen Wachsen, Synchrowachs HGLC1, Mostermont® CAV2, Hoechst-Wachs OP3 oder Kombinationen dieser Wachse.

Eine wäßrige Dispersion der Partikel (Mikrokapseln oder Wachspartikel) kann analog der Rezepturen für eine CS-Formulierung erhalten werden.

Die nach den oben beschriebenen Methoden erhaltenen Mikrokapseln können in unterschiedliche, oben im Text erwähnte Formulierungen eingebaut werden. Dabei können auch weitere Wirkstoffe in die Formulierung eingearbeitet werden, beispielsweise wasserlösliche Wirkstoffe in der wäßrigen Phase der CS-Formulierungen, oder beispielsweise feste Wirkstoffe in WG-Formulierungen.

Nach erfolgter Mikroverkapselung können die Kapseln vom Lösungsmittel befreit und mit den üblichen Methoden, beispielsweise Sprühtrocknen, getrocknet werden. Die Kapseln lassen sich derart lagern und verschicken und werden vor dem Aufbringen auf die entsprechende Kultur mit eventuellen weiteren Wirkstoffen, Adjuvantien und den üblichen Zusatzstoffen formuliert.

Die nach dem Aushärten der Kapseln erhaltene Dispersion kann jedoch auch zur Herstellung geeigneter agrochemischer Formulierungen enthaltend die oben erwähnten weiteren Bestandteile verwendet werden, ohne daß die Kapseln aus den Dispersionen isoliert werden.

In diesen Mikrokapseldispersionen können organische Lösemittel oder deren Gemische aus der Gruppe der N-Alkylfettsäureamide, N-Alkyllactame, Fettsäureester, Cyclohexanone, Isophorone, Phthalsäureester und aromatischen Kohlenwasserstoffe eingesetzt werden, wobei niederalkylsubstituierte Naphthalinderivate besonders geeignet sind.

Erfindungsgemäß geeignete, im Handel erhältliche Lösemittel sind beispielsweise Solvesso® 200 Solvesso® 150 und Solvesso® 100 (1), Butyldiglykolacetat, Shellsol® RA (2), Acetrel® 400 (3), Agsolex® 8 (4), Agsolex® 12 (5), Norpar® 13 (6), Norpar® 15 (7), Isopar® V (8), Exsol® D 100 (9), Shellsol® K (10) und Shellsol® R (11), welche sich wie folgt zusammensetzen:
(1) Aromatengemische; Hersteller: Exxon.
(2) Gemische alkylierter Benzole, Siedebereich 183-312°C, Hersteller: Shell.
(3) Hochsiedendes Aromatengemisch, Siedebereich: 332-355°C, Hersteller: Exxon.
(4) N-Octylpyrrolidon, Siedepunkt (0,3 mm Hg) 100°C, Hersteller: GAF.
(5) N-Dodecylpyrrolidon, Siedepunkt (0,3 mm Hg) 145°C, Hersteller: GAF.
(6) Aliphatische Kohlenwasserstoffe, Siedebereich: 228-243°C, Hersteller: Exxon.
(7) Aliphatische Kohlenwasserstoffe, Siedebereich: 252-272°C, Hersteller: Exxon.
(8) Aliphatische Kohlenwasserstoffe, Siedebereich: 278-305°C, Hersteller: Exxon.
(9) Aliphatische Kohlenwasserstoffe, Siedebereich: 233-263°C, Hersteller: Exxon.
(10) Aliphatische Kohlenwasserstoffe, Siedebereich: 192-254°C, Hersteller: Shell.
(11) Aliphatische Kohlenwasserstoffe, Siedebereich: 203-267°C, Hersteller: Shell.

Auch Mischungen dieser Lösemittel untereinander sind geeignet. Insbesondere sind Butyldiglykolacetat, Acetrei® 400, Agsolek® 8 und Agsolex® 12 gut verwendbar. Solvesso® 200 ist besonders bevorzugt.

In der wäßrigen Phase der erfindungsgemäßen Dispersionen sind oberflächenaktive Formulierungshilfstoffe aus der Gruppe der Emulgatoren und Dispergatoren enthalten. Sie stammen aus einer Gruppe, welche z. B. die Stoffamilien der Polyvinylalkohole, der Polyalkylenoxide, der Kondensationsprodukte von Formaldehyd mit Naphthalinsulfonsäuren und/oder Phenolen, der Polyacrylate, der Copolymerer aus Maleinsäureanhydrid mit Alkylenalkylether, der Ligninsulfonate, und der Polyvinylpyrrolidone umfaßt. Diese Stoffe werden zu 0,2 bis 10 Gew.%, bevorzugt zu 0,5 bis 4 Gew.%, jeweils bezogen auf die gesamte Dispersion eingesetzt.

Bei den Polyalkylenoxiden werden Blockcopolymere bevorzugt, deren Molekülzentrum von einem Polypropylenoxidblock, die Molekülperipherie dagegen von Polyethylenoxidblöcken gebildet wird. Besonders bevorzugt werden dabei Stoffe, bei welchen der Polypropylenblock eine Molmasse von 2000 - 3000 aufweist, und die Polyethylenoxidblöcke einen Anteil von 60 bis 80 % an der gesamten Molmasse ausmachen. Ein solcher Stoff wird z. B. von der Firma BASF Wyandotte unter der Bezeichnung Pluronic® F87 vertrieben.
Weitere geeignete Dispergatoren sind Calcium-Ligninsulfonat, hochveredeltes Natrium-Ligninsulfonat (z. B. Vanisperse® CB der Fa. Borregaard), Dispergiermittel S und Dispergiermittel SS der Fa. Clariant GmbH, Naphthalin-Sulfonsäure-Formaldehyd-Kondensationsprodukt-Natriumsalz (z. B. Morwet® D 425 der Witco oder Tamol® NN 8906 der Fa. BASF), Natriumpolycarboxylat (z. B. Sopropan® T 36 der Fa. Rhodia GmbH).

Geeignete Polyvinylalkohole werden durch Teilverseifung von Polyvinylacetat hergestellt. Sie weisen einen Hydrolysegrad von 72 bis 99 Mol-% und eine Viskosität von 2 bis 18 cP (gemessen in 4 %-iger wäßriger Lösung bei 20°C, entsprechend DIN 53 015) auf. Vorzugsweise verwendet man teilverseifte Polyvinylalkohole mit einem Hydrolysegrad von 83 bis 88 Mol-% und niedriger Viskosität, insbesondere von 3 bis 5 cP.

Die wäßrige Phase der Dispersionen enthält gegebenenfalls mindestens ein weiteres Formulierungshilfsmittel aus der Reihe der Netzmittel, der Frostschutzmittel, der Verdickungsmittel, der Konservierungsmittel und dichteerhöhenden Bestandteile.

Als Netzmittel kommen beispielsweise Vertreter aus den Stoffgruppen der alkylierten Naphthalinsulfonsäuren, der N-Fettacyl-N-alkyltauride, der Fettacylamidoalkylbetaine, der Alkylpolyglycoside, der alpha-Olefinsulfonate, der Alkylbenzolsulfonate, der Ester, der Sulfobernsteinsäure, und der (ggf. durch Alkylenoxy-Gruppen modifizierten) Fettalkylsulfate in Frage. Der Anteil liegt hier zwischen 0 und 5 Gew.-%, bevorzugt zwischen 0 und 2 Gew.-%, bezogen auf die Gesamtformulierung.

Geeignete Handelsprodukte sind beispielsweise Darvan® Nr. 3, Vanisperse® CB, Hoe S1728 (Clariant GmbH), Luviskol® K 30, Reserve C, Forianit® P, Sokalan® CP 10, Maranil A, Genapol® PF 40, Genapol® LRO, Tributylphenolpolyglykolether, wie die Sapogenat T-Marken (Clariant GmbH), Nonylphenolpolyglykolether, wie die Arkopal® N-Marken (Clariant GmbH) oder Tristyrylphenolpolyglykolether-Derviate. Als Konservierungsmittel können den wäßrigen Dispersionen folgende Mittel zugesetzt werden: Formaldehyd oder Hexahydrotriazinderivate wie z. B. Mergal® KM 200 der Firma Riedel de Haen oder Cobate® C der Firma Rhone Poulenc, Isothiazolinon-Derivate, wie z. B. Mergal® K9N der Firma Riedel de Haen oder Kathon® CG der Firma Rohm u. Haas, 1,2-Benzisothiazolin-2-one wie z. B. Nipacide® BIT 20 der Fa. Nipa Laboratorien GmbH oder Mergal® K10 der Firma Riedel de Haen oder 5-Brom-5-nitro-1,3-dioxan (Bronidox® LK der Fa. Henkel). Der Anteil dieser Konservierungsmittel beträgt maximal 2 Gew.-% bezogen auf die Gesamtformulierung.
Geeignete Frostschutzmittel sind beispielsweise ein- oder mehrwertige Alkohole, Glykolether oder Harnstoff, insbesondere Calciumchlorid, Glycerin, Isopropanol, Propylenglykolmonomethylether, Di- oder Tripropylenglykolmonomethylether oder Cyclohexanol. Der Anteil dieser Frostschutzmittel beträgt maximal 20 Gew.-% bezogen auf die Gesamtdispersion.

Verdickungsmittel können anorganischer oder organischer Natur sein; sie können auch kombiniert werden. Geeignet sind z. B. solche auf Aluminiumsilikat-, Xanthan-, Methylcellulose-, Polysaccharid-, Erdalkalisilikat-, Gelatine- und Polyvinylalkohol-Basis, wie beispielsweise Bentone® EW, Vegum®, Rodopol® 23 oder Kelzan® S. lhr Anteil beträgt ca. 0 - 0,5 Gew.%, vorzugsweise ca. 0,3 Gew.-% bezogen auf die Gesamtdispersion.

Die Erfindung betrifft auch ein Verfahren zur Herstellung der erfindungsgemäßen Mikrokapseldispersionen, das dadurch gekennzeichnet ist, daß man zunächst eine grobe Voremulsion aus organischer und wäßriger Phase (ohne Diamin) herstellt, und diese anschließend Scherkräften aussetzt, indem man sie vorzugsweise über ein kontinuierlich arbeitendes Mischorgan gibt, beispielsweise einen statischen Mischer, eine Zahnkolloidmühle oder ähnliches. Durch diesen Schritt erst entsteht die zur späteren Mikrokapselbildung nötige Feinteiligkeit der emulgierten Öltröpfchen. Zum Schluß wird, gegebenenfalls nach Zugabe eines Diamins, durch Polyreaktion im gesamten Stoffvolumen ausgehärtet. Alternativ wird auf die Zugabe der wasserlöslichen Polyamins verzichtet, und die fertige Emulsion wird über eine bestimmte Zeit bei einer geeigneten Temperatur gerührt, beispielsweise 6 h bei 70°C.

Mögliche Freisetzungsmechanismen sind etwa der abiotische und/oder der biotische Abbau (Verwitterung), das Aufplatzen der Kapselwände, oder das Herausdiffundieren bzw. Herauslösen des Wirkstoffs aus den Kapseln. Das kann in Abhängigkeit von dem Kontakt mit Flüssigkeiten, wie beispielsweise Wasser, oder in Abhängigkeit von der Temperatur geschehen.

Die Freisetzung der Hauptmenge des Wirkstoffs aus den Mikrokapseln erfolgt im allgemeinen innerhalb der ersten 4 Wochen nach der Applikation, vorzugsweise innerhalb der ersten 7 Tage.

Daneben enthalten die genannten Wirkstofformulierungen gegebenenfalls übliche Hilfsstoffe wie Haft-, Netz-, Dispergier-, Emulgier-, Penetrations-, Konservierungs-, Frostschutz- und Lösungsmittel, Füll-, Träger- und Farbstoffe, Entschäumer, Adjuvants wie Mineral- oder Pflanzenöle und deren Derivate, Verdunstungshemmer und den pH-Wert und die Viskosität beeinflussende Mittel.

Die erfindungsgemäßen herbiziden Mittel lassen sich durch übliche Verfahren herstellen, z.B. durch Vermischen der Komponenten mit Hilfe von Rührern, Schüttlem oder (statischen) Mischern.

Eine bevorzugte Ausführungsvariante dieser Erfindung besteht darin, daß Formulierungen, die Verbindungen der Formel (I) enthalten, im Spritztank mit Tensiden B) und / oder deren Formulierungen gemischt werden. Die Verbindungen der Formel (I) lassen sich hierzu beispielsweise auf Basis von Kaolin als wasserdispergierbare Granulate formulieren, wobei der Gehalt an Verbindungen der Formel (I) in weiten Bereichen zwischen 0,01 und 99 Gew.-%, vorzugsweise zwischen 0,5 und 80 Gew.-%, schwanken kann. Diese Formulierungen können neben den Verbindungen der Formel (I) weitere agrochemische Wirkstoffe, wie Safener enthalten, z. B. in einem Gehalt 0,1 - 50 Gew.%, vorzugsweise 0,5 - 40 Gew.%. Die Tenside B) können als Reinsubstanzen oder in formulierter Form, vorzugsweise als flüssiges Produkt wie wasserlösliche Konzentrate oder emulgierbare Konzentrate, zugesetzt werden.

Fertigformulierungen können aus Verbindungen der Formel (I), Tensiden B) und weiteren Hilfsstoffen hergestellt werden. In den Fertigformulierungen kann der Gehalt an Verbindungen der Formel (I) in weiten Bereichen schwanken und beträgt im allgemeinen zwischen 0,01 und 99 Gew.-%, vorzugsweise zwischen 0,1 und 60 Gew.-%. Der Gehalt an Tensiden B) kann ebenfalls in weiten Bereichen schwanken und beträgt im allgemeinen zwischen 1 und 80 Gew.-%, in der Regel zwischen 5 und 50 Gew.-%. Schließlich können die Fertigformulierungen auch weitere agrochemische Wirkstoffe wie Safener enthalten, z. B. in einem Gehalt von 0,01-60 Gew.-%, vorzugsweise 0,1-40 Gew.-%.

Die Formulierungen können gegebenenfalls Hilfsstoffe wie Lösungsmittel enthalten, z. B. aromatische Lösungsmittel wie Xylole oder Aromatengemische aus der Solvesso®-Reihe wie Solvesso® 100, Solvesso® 150 oder Solvesso® 200 von Exxon; alphatische oder isoparaffinische Lösemittel wie Produkte aus der Exxol®-D- bzw.
Isopur®-Reihe von Exxon; Öle pflanzlicher, tierischer oder mineralischer Herkunft sowie deren Derivate, wie Rapsöle oder Rapsöl-methylester ; Ester wie Butyl-Acetat; Ether wie Diethylether, THF oder Dioxan. Der Lösungsmittelgehalt beträgt bevorzugt 1-95 Gew.-%, besonders bevorzugt 5-80 Gew.-%. Weitere geeignete Hilfstoffe sind z. B. Emulgatoren (bevorzugter Gehalt: 0,1-10 Gew.-%), Dispergatoren (bevorzugter Gehalt: 0,1-10 Gew.-%) und Verdicker (bevorzugter Gehalt: 0,1 - 5 Gew.-%), sowie gegebenenfalls Stabilisatoren wie Entschäumer, Mittel zur Abdriftreduktion, Dünger, z.B. Stickstoff-haltige Dünger, Wasserfänger, Säurefänger und Kristallisationsinhibitoren.

Der Einsatz der erfindungsgemäßen herbiziden Mittel kann im Vor- oder im Nachauflaufverfahren erfolgen,vorzugsweise im Nachauflauf, z. B. durch Spritzung. Durch den Einsatz der Mischungen kann der zur Unkrautbekämpfung notwendige Präparateaufwand wesentlich reduziert werden.

Die erfindungsgemäß zu verwendenden Tenside B) werden in der Regel zusammen mit dem bzw. den Verbindungen A) oder unmittelbar hintereinander ausgebracht, vorzugsweise in Form einer Spritzbrühe, welche die Tenside B) und die Verbindungen A) in wirksamen Mengen und gegebenenfalls weitere übliche Hilfsmittel enthält. Die Spritzbrühe wird bevorzugt auf Basis von Wasser und / oder einem Öl, z. B. einem hochsiedenden Kohlenwasserstoff wie Kerosin oder Paraffin hergestellt. Dabei können die erfindungsgemäßen herbiziden Mittel als Tankmischung oder über eine "Fertig-Formutierung" realisiert werden.

Das Gewichtsverhältnis von Verbindungen A) zu Tensid B) kann in einem weiten Bereich variieren und hängt z. B. von der Wirksamkeit des Herbizids. In der Regel ist es im Bereich von 10:1 bis 1:5000, vorzugsweise 4:1 bis 1:2000.

Die Aufwandmengen der Verbindung(en) der Formel (I) liegen im allgemeinen zwischen 10 und 2000 g AS/ha (AS = Aktivsubstanz, d. h. Aufwandmenge bezogen auf den aktiven Wirkstoff), bevorzugt zwischen 50 und 1000 g AS/ha. Die Aufwandmengen an Tensiden B) liegen im allgemeinen zwischen 1 und 5000 g Tensid / ha, bevorzugt werden 10 und 2000g Tensid / ha, insbesondere 50 - 1000 g Tensid / ha.

Die Konzentration der erfindungsgemäß zu verwendenden Tenside B) ist in einer Spritzbrühe in der Regel von 0,05 bis 4 Gew.-%, vorzugsweise 0,1 bis 1 Gew.-%, insbesondere 0,1 bis 0,3 Gew.-% Tensid.

Die erfindungsgemäßen herbiziden Mittel können als zusätzliche Komponente auch von Komponente A) verschiedene agrochemische Wirkstoffe wie Herbizide, Fungizide, Insektizide oder Safener enthalten.

Beispiele für in den erfindungsgemäßen herbiziden Mitteln enthaltene herbizide Wirkstoffe sind z.B. ALS-Inhibitoren (Acetolactat-Synthetase-Inhibitoren) oder von ALS-Inhibitoren verschiedene Herbizide, wie Herbizide aus der Gruppe der Carbamate, Thiocarbamate, Halogenacetanilide, substituierte Phenoxy-, Naphthoxy- und Phenoxyphenoxycarbonsäure-Derivate sowie Heteroaryloxy-phenoxyalkancarbonsäure-Derivate, wie Chinolyloxy-, Chinoxalyl-oxy-, Pyridyloxy-, Benzoxazolyloxy- und Benzthiazolyloxyphenoxyalkan-carbonsäureester, Cyclohexandionabkömmlinge, Imidazolinone, Phosphor-haltige Herbizide, z.B. vom Glufosinate-Typ oder vom Glyphosate-Typ, Pyrimidinyloxy-pyridincarbonsäure-Derivate, Pyrimidyloxy-benzoesäure-Derivate, Triazolo-pyrimidin-sulfonamid-Derivate sowie S-(N-Aryl-N-alkylcarbamoylmethyl)-dithiophosphorsäureester.

Bevorzugte ALS-Inhibitoren entstammen aus der Reihe der Sulfonylharnstoffe und/oder ihrer Salze, z.B. Pyrimidin- oder Triazinylaminocarbonyl-[benzol-, pyridin-, pyrazol-, thiophen- und (alkylsulfonyl)-alkylamino-]-sulfamide. Bevorzugt als Substituenten am Pyrimidinring oder Triazinring sind Alkoxy, Alkyl, Haloalkoxy, Haloalkyl, Halogen oder Dimethylamino, wobei alle Substituenten unabhängig voneinander kombinierbar sind. Bevorzugte Substituenten im Benzol-, Pyridin-, Pyrazol-, Thiophen- oder (Alkylsulfonyl)-alkylamino-Teil sind Alkyl, Alkoxy, Halogen, Amino, Alkylamino, Dialkylamino, Nitro, Alkoxycarbonyl, Aminocarbonyl, Alkylaminocarbonyl, Dialkylaminocarbonyl, Alkoxyaminocarbonyl, Halogenalkoxy, Halogenalkyl, Alkylcarbonyl, Alkoxyalkyl, (Alkansulfonyl)alkylamino. Solche geeigneten Sulfonylharnstoffe sind beispielsweise
A1) Phenyl- und Benzylsulfonylharnstoffe und verwandte Verbindungen, z.B.
   1-(2-Chlorphenylsulfonyl)-3-(4-methoxy-6-methyl-1,3,5-triazin-2-yl)-harnstoff (Chlorsulfuron),
   1-(2-Ethoxycarbonylphenylsulfonyl)-3-(4-chlor-6-methoxypyrimidin-2-yl)-harnstoff (Chlorimuron-ethyl),
   1-(2-Methoxyphenylsulfonyl)3-(4-methoxy-6-methyl-1,3,5-triazin-2-yl)-harnstoff (Metsulfuron-methyl),
   1-(2-Chlorethoxyphenylsulfonyl)-3-(4-methoxy-6-methyl-1,3,5-triazin-2-yl)-harnstoff (Triasulfuron),
   1-(2-Methoxycarbonylphenylsulfonyl)-3-(4,6-dimethylpyrimidin-2-yl)-harnstoff (Sulfumeturon-methyl),
   1-(2-Methoxycarbonylphenylsulfonyl)-3-(4-methoxy-6-methyl-1,3,5-triazin-2-yl)-3-methylhamstoff (Tribenuron-methyl),
   1-(2-Methoxycarbonylbenzylsulfonyl)-(4,6-dimethoxypyrimidin-2-yl)-harnstoff (Bensulfuron-methyl),
   1-(2-Methoxycarbonylphenylsulfonyl)-3-(4,6-bis-(difluormethoxy)pyrimidin-2-yl)-harnstoff, (Primisulfuron-methyl),
   3-(4-Ethyl-6-methoxy-1,3,5-triazin-2-yl)-1-(2,3-dihydro-1,1-dioxo-2-methylbenzo-[b]thiophen-7-sulfonyl)-harnstoff (EP-A 0 079 683),
   3,(4-Ethoxy-6-ethyl-1,3,5-triazin-2-yl)-1-(2,3-dihydro-1,1-dioxo-2-methylbenzo[b]thiophen-7-sulfonyl)harn*stoff (EP-A 0 079 683),
   3-(4-Methoxy-6-methyl-1,3,5-triazin-2-yl)-1-(2-methoxycarbonyl-5-jod-phenylsulfonyl)-harnstoff (Iodosulfuron-methyl und dessen Natriumsalz, WO 92/13845),
   DPX-66037, Triflusulfuron-methyl (s. Brighton Crop Prot. Conf. - Weeds -1995, S. 853),
   CGA-277476, (s. Brighton Crop Prot. Conf. - Weeds - 1995, S. 79),
   Methyl-2-[3-(4,6-dimethoxypyrimidin-2-yl)ureidosulfonyl]-4-methansulfon-amido-methyl-benzoat (Mesosulfuron-methyl, WO 95/10507),
   N,N-Dimethyl-2-[3-(4,6-dimethoxypyrimidin-2-yl)ureidosulfonyl]-4-formylamino-benzamid (Foramsulfuron, WO 95/01344);
A2) Thienylsulfonylharnstoffe, z.B.
   1-(2-Methoxycarbonylthiophen-3-yl)-3-(4-methoxy-6-methyl-1,3,5-triazin-2-yl)harnstoff (Thifensulfuron-methyl);
A3) Pyrazolylsulfonylharnstoffe, z.B.
   1-(4-Ethoxycarbonyl-1-methylpyrazol-5-yl-sulfonyl)-3-(4,6-dimethoxypyrimidin-2-yl)harnstoff (Pyrazosulfuron-methyl);
   Methyl-3-chlor-5-(4,6-dimethoxypyrimidin-2-ylcarbamoylsulfamoyl)-1-methyl-pyrazol-4-carboxylat (EP-A 0 282 613);
   5-(4,6-Dimethylpyrimidin-2-yl-carbamoylsulfamoyl)-1-(2-pyridyl)-pyrazol-4-carbonsäuremethylester (NC-330, s. Brighton Crop Prot. Conference 'Weeds' 1991, Vol. 1, S. 45 ff.),
   DPX-A8947, Azimsulfuron, (s. Brighton Crop Prot. Conf. 'Weeds' 1995, S. 65);
A4) Sulfondiamid-Derivate, z.B.
   3-(4,6-Dimethoxypyrimidin-2-yl)-1-(N-methyl-N-methylsulfonylaminosulfonyl)-hamstoff (Amidosulfuron) und dessen Strukturanaloge (EP-A 0 131 258 und Z. Pfl. Krankh. Pfl. Schutz, Sonderheft XII, 489-497 (1990));
A5) Pyridylsulfonylharnstoffe, z.B.
   1-(3-N,N-Dimethylaminocarbonylpyridin-2-ylsulfonyl)-3-(4,6-dimethoxypyrimidin-2-yl)-harnstoff (Nicosulfuron),
   1-(3-Ethylsulfonylpyridin-2-ylsulfonyl)-3-(-(4,6-dimethoxypyrimidin-2-yl)-harnstoff (Rimsulfuron),
   2-[3-(4,6-Dimethoxypyrimidin-2-yl)-ureidosulfonyl]-6-trifluormethyl-3-pyridin-carbonsäuremethylester, Natriumsalz (DPX-KE 459, Flupyrsulfuron, s. Brighton Crop Prot. Conf. Weeds, 1995, S. 49),
   Pyridylsulfonylhamstoffe, wie sie z.B. in DE-A 40 00 503 und DE-A 40 30 577 beschrieben sind, vorzugsweise solche der Formel 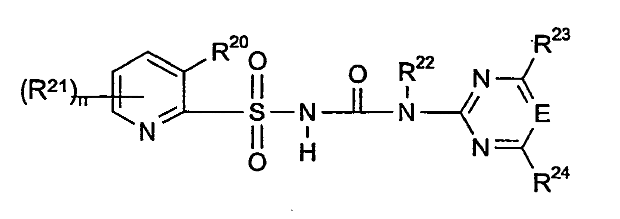
   worin
   - E: CH oder N, vorzugsweise CH,
   - R²⁰: Jod oder NR²⁵R²⁶,
   - R²¹: Wasserstoff, Halogen, Cyano, (C₁-C₃)-Alkyl, (C₁-C₃)-Alkoxy, (C₁-C₃)-Halogenalkyl, (C₁-C₃)-Halogenalkoxy, (C₁-C₃)-Alkylthio, (C₁-C₃)-Alkoxy-(C₁₋C₃)-alkyl, (C₁-C₃)-Alkoxy-carbonyl, Mono- oder Di-((C₁-C₃)-alkyl)-amino, (C₁₋C₃)-Alkylsulfinyl oder -sulfonyl, SO₂-NR^{x}R^{y} oder CO-NR^{x}R^{y}, insbesondere Wasserstoff,
   - R^{x}, R^{y}: unabhängig voneinander Wasserstoff, (C₁-C₃)-Alkyl, (C₁-C₃)-Alkenyl, (C₁-C₃)-Alkinyl oder zusammen -(CH₂)₄-, -(CH₂)₅- oder -(CH₂)₂-O-(CH₂)₂-,
   - n: 0,1,2 oder 3, vorzugsweise 0 oder 1 ist,
   - R²²: Wasserstoff oder CH₃,
   - R²³: Halogen, (C₁-C₂)-Alkyl, (C₁-C₂)-Alkoxy, (C₁-C₂)-Halogenalkyl, insbesondere CF₃, (C₁-C₂)-Halogenalkoxy, vorzugsweise OCHF₂ oder OCH₂CF₃,
   - R²⁴: (C₁-C₂)-Alkyl, (C₁-C₂)-Halogenalkoxy, vorzugsweise OCHF₂, oder (C₁-C₂)-Alkoxy,
   - R²⁵: (C₁-C₄)-Alkyl,
   - R²⁶: (C₁-C₄)-Alkylsulfonyl oder

   R²⁵ und R²⁶ gemeinsam eine Kette der Formel -(CH₂)₃SO₂- oder-(CH₂)₄SO₂- bedeuten, z.B. 3-(4,6-Dimethoxypyrimiden-2-yl)-1-(3-N-methylsulfonyl-N-methylaminopyridin-2-yl)-sulfonylharnstoff, oder deren Salze;
A6) Alkoxyphenoxysulfonylharnstoffe, wie sie z.B. in EP-A 0 342 569 beschrieben sind, vorzugsweise solche der Formel 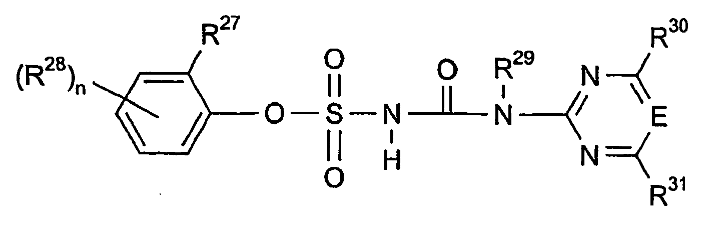
   worin
   - E: CH oder N, vorzugsweise CH,
   - R²⁷: Ethoxy, Propoxy oder Isopropoxy,
   - R²⁸: Halogen, NO₂, CF₃, CN, (C₁-C₄)-Alkyl, (C₁-C₄)-Alkoxy, (C₁-C₄)-Alkylthio oder (C₁-C₃)-Alkoxy-carbonyl, vorzugsweise in 6-Position am Phenylring,
   - n: 0, 1, 2 oder 3, vorzugsweise 0 oder 1,
   - R²⁹: Wasserstoff, (C₁-C₄)-Alkyl oder (C₃-C₄)-Alkenyl,
   - R³⁰, R³¹: unabhängig voneinander Halogen, (C₁-C₂)-Alkyl, (C₁-C₂)-Alkoxy, (C₁-C₂)-Halogenalkyl, (C₁-C₂)-Halogenalkoxy oder (C₁-C₂)-Alkoxy-(C₁-C₂)-alkyl, vorzugsweise OCH₃ oder CH₃, bedeuten, z.B. 3-(4,6-Dimethoxypyrimidin-2-yl)-1 -(2-ethoxyphenoxy)-sulfonylhamstoff, oder deren Salze;
A7) Imidazolylsulfonylharnstoffe, z.B.
   MON 37500, Sulfosulfuron (s. Brighton Crop Prot. Conf. 'Weeds', 1995, S: 57), und andere verwandte Sulfonylharnstoff-Derivate und Mischungen daraus;
   Typische Vertreter dieser Wirkstoffe sind unter anderem die nachfolgend aufgeführten Verbindungen: Amidosulfuron, Azimsulfuron, Bensulfuron-Methyl, Chlorimuron-Ethyl, Chlorsulfuron, Cinosulfuron, Cyclosulfamuron, Ethametsulfuron-Methyl, Ethoxysulfuron, Flazasulfuron, Flupyrsulfuron-Methyl-Natrium, Halosulfuron-Methyl, Imazosulfuron, Metsulfuron-Methyl, Nicosulfuron, Oxasulfuron, Primisulfuron-Methyl, Prosulfuron, Pyrazosulfuron-Ethyl, Rimsulfuron, Sulfometuron-Methyl, Sulfosulfuron, Thifensulfuron-Methyl, Triasulfuron, Tribenuron-Methyl, Triflusulfuron-Methyl, lodosulfuron-Methyl und dessen Natriumsalz (WO 92/13845), Mesosulfuron-Methyl und dessen Natriumsalz (Agrow Nr. 347, 3. März 2000, Seite 22 (PJB Publications Ltd. 2000)) und Foramsulfuron und dessen Natriumsalz (Agrow Nr. 338, 15. Oktober 1999, Seite 26 (PJB Publications Ltd. 2000)).
   Die vorstehend aufgeführten Wirkstoffe sind z.B. bekannt aus C.D.S. Tomlin, "The Pesticide Manual", 12. Auflage (1999), The British Crop Protection Council oder den nach den einzelnen Wirkstoffen aufgeführten Literaturstellen.
   Bei den in den erfindungsgemäßen herbiziden Mitteln enthaltenen von ALS-Inhibitoren verschiedenen herbiziden Wirkstoffen handelt es sich z.B. Herbizide aus der Gruppe der Carbamate, Thiocarbamate, Halogenacetanilide, substituierte Phenoxy-, Naphthoxy- und Phenoxyphenoxycarbonsäure-Derivate sowie Heteroaryloxy-phenoxyalkancarbonsäure-Derivate, wie Chinolyloxy-, Chinoxalyl-oxy-, Pyridyloxy-, Benzoxazolyloxy- und Benzthiazolyloxyphenoxyalkan-carbonsäureester, Cyclohexandionabkömmlinge, Imidazolinone, Phosphor-haltige Herbizide, z.B. vom Glufosinate-Typ oder vom Glyphosate-Typ, Pyrimidinyloxy-pyridincarbonsäure-Derivate, Pyrimidyloxy-benzoesäure-Derivate, Triazolopyrimidin-sulfonamid-Derivate sowie S-(N-Aryl-N-alkylcarbamoylmethyl)-dithiophosphorsäureester. Bevorzugt sind dabei Phenoxyphenoxy- und Heteroaryloxyphenoxycarbonsäureester und -salze, Imidazolinone sowie Herbizide wie Bentazon, Cyanazin, Atrazin, Dicamba oder Hydroxybenzonitrile wie Bromoxynil und loxynil und andere Blattherbizide.
   Geeignete von ALS-Inhibitoren verschiedene herbizide Wirkstoffe a), die in den erfindungsgemäßen herbiziden Mitteln als Komponente a) enthalten sein können, sind beispielsweise:
B) Herbizide vom Typ der Phenoxyphenoxy- und
   Heteroaryloxyphenoxycarbonsäure-Derivate, wie
B1) Phenoxyphenoxy- und Benzyloxyphenoxy-carbonsäure-Derivate, z.B. 2-(4-(2,4-Dichlorphenoxy)-phenoxy)-propionsäuremethylester (Diclofop-methyl),
   2-(4-(4-Brom-2-chlorphenoxy)-phenoxy)-propionsäuremethylester (DE-A 26 01 548),
   2-(4-(4-Brom-2-fluorphenoxy)-phenoxy)-propionsäuremethylester (US-A 4,808,750),
   2-(4-(2-Chlor-4-trifluormethylphenoxy)-phenoxy)-propionsäuremethylester (DE-A 24 33 067),
   2-(4-(2-Fluor-4-trifluormethylphenoxy)-phenoxy)-propionsäuremethylester (US-A 4,808,750),
   2-(4-(2,4-Dichlorbenzyl)-phenoxy)-propionsäuremethylester (DE-A 24 17 487),
   4-(4-(4-Trifluormethylphenoxy)-phenoxy)-pent-2-en-säureethylester,
   2-(4-(4- Trifluormethylphenoxy)-phenoxy)-propionsäuremethylester (DE-A 24 33 067);
B2) "Einkernige" Heteroaryloxyphenoxy-alkancarbonsäure-Derivate, z.B.
   2-(4-(3,5-Dichlorpyridyl-2-oxy)-phenoxy)-propionsäureethylester (EP-A 0 002 925),
   2-(4-(3,5-Dichlorpyridyl-2-oxy)-phenoxy)-propionsäurepropargylester (EP-A 0 003 114),
   2-(4-(3-Chlor-5-trifluormethyl-2-pyridyloxy)-phenoxy)-propionsäuremethylester (EP-A 0 003 890),
   2-(4-(3-Chlor-5-trifluormethyl-2-pyridyloxy)-phenoxy)-propionsäureethylester (EP-A 0 003 890),
   2-(4-(5-Chlor-3-fluor-2-pyridyloxy)-phenoxy)-propionsäurepropargylester (EP-A 0 191 736),
   2-(4-(5-Trifluormethyl-2-pyridyloxy)-phenoxy)-propionsäurebutylester (Fluazifop-butyl);
B3) "Zweikernige" Heteroaryloxyphenoxy-alkancarbonsäure-Derivate, z.B.
   2-(4-(6-Chlor-2-chinoxalyloxy)-phenoxy)-propionsäuremethylester und -ethylester (Quizalofopmethyl und Quizalofopethyl),
   2-(4-(6-Fluor-2-chinoxalyloxy)-phenoxy)-propionsäuremethylester (s. J. Pest. Sci. Vol. 10, 61 (1985)),
   2-(4-(6-Chlor-2-chinoxalyloxy)-phenoxy)-propionsäure-2-isopropylidenaminooxyethylester (Propaquizafop),
   2-(4-(6-Chlorbenzoxazol-2-yl-oxy)-phenoxy)-propionsäureethylester (Fenoxapropethyl), dessen D(+) Isomer (Fenoxaprop-P-ethyl) und 2-(4-(6-Chlorbenzthiazol-2-yloxy)-phenoxy)-propionsäureethylester (DE-A 26 40 730),
   2-(4-(6-Chlorchinoxalyloxy)-phenoxy)-propionsäure-tetrahydro-2-furylmethylester (EP-A 0 323 727);
C) Chloracetanilide, z.B.
   N-Methoxymethyl-2,6-diethyl-chloracetanilid (Alachlor),
   N-(3-Methoxyprop-2-yl)-2-methyl-6-ethyl-chloracetanilid (Metolachlor),
   N-(3-Methyl-1,2,4-oxadiazol-5-yl-methyl)-chloressigsäure-2,6-dimethylanilid,
   N-(2,6-Dimethylphenyl)-N-(1-pyrazolylmethyl)-chloressigsäureamid (Metazachlor);
D) Thiocarbamate, z.B.
   S-Ethyl-N,N-dipropylthiocarbamat (EPTC),
   S-Ethyl-N,N-diisobutylthiocarbamat (Butylate);
E) Cyclohexandionoxime, z.B.
   3-(1-Allyloxyiminobutyl)-4-hydroxy-6,6-dimethyl-2-oxocyclohex-3-encarbonsäuremethylester, (Alloxydim),
   2-(1-Ethoxyiminobutyl)-5-(2-ethylthiopropyl)-3-hydroxy-cyclohex-2-en-1-on (Sethoxydim),
   2-(1-Ethoxyiminobutyl)-(2-phenylthiopropyl)-3-hydroxy-cyclohex-2-en-1-on (Cloproxydim),
   2-(1-(3-Chlorallyloxy)-iminobutyl)-5-(2-ethylthiopropyl)-3-hydroxy-cyclohex-2-en-1-on,
   2-(1-(3-Chlorallyloxy)-iminopropyl)-5-(2-ethylthiopropyl)-3-hydroxy-cyclohex-2-en-1-on (Clethodim),
   2-(1-Ethoxyiminobutyl)-3-hydroxy-5-(thian-3-yl)-cyclohex-2-en-on (Cycloxydim),
   2-(1-Ethoxyiminopropyl)-5-(2,4,6-trimethylphenyl)-3-hydroxy-cyclohex-2-en-1-on (Tralkoxydim);
F) Imidazolinone, z.B.
   2-(4-Isopropyl-4-methyl-5-oxo-2-imidazolin-2-yl)-5-methylbenzoesäure-methylester und 2-(4-Isopropyl-4-methyl-5-oxo-2-imidazolin-2-yl)-4-methylbenzoesäure (Imazamethabenz),
   5-Ethyl-2-(4-isopropyl-4-methyl-5-oxo-2-imidazolin-2-yl)-pyridin-3-carbonsäure (Imazethapyr),
   2-(4-Isopropyl-4-methyl-5-oxo-2-imidazolin-2-yl)-chinolin-3-carbonsäure (Imazaquin),
   2-(4-Isopropyl-4-methyl-5-oxo-2-imidazolin-2-yl)-pyridin-3-carbonsäure (Imazapyr),
   5-Methyl-2-(4-isopropyl-4-methyl-5-oxo-2-imidazolin-2-yl)-pyridin-3-carbonsäure (Imazethamethapyr);
G) Triazolopyrimidinsulfonamid-Derivate, z.B.
   N-(2,6-Difluorphenyl)-7-methyl-1,2,4-triazolo[1,5-c]pyrimidin-2-sulfonamid (Flumetsulam),
   N-(2,6-Dichlor-3-methylphenyl)-5,7-dimethoxy-1,2,4-triazolo[1,5-c]pyrimidin-2-sulfonamid,
   N-(2,6-Difluorphenyl)-7-fluor-5-methoxy-1,2,4-triazolo[1,5-c]-pyrimidin-2-sulfonamid,
   N-(2,6-Dichlor-3-methylphenyl)-7-chlor 5-methoxy-1,2,4-triazolo[1,5-c]-pyrimidin-2-sulfonamid,
   N-(2-Chlor-6-methoxycarbonyl)-5,7-dimethyl-1,2,4-triazolo[1,5-c]-pyrimidin-2-sulfonamid (EP-A 0 343 752, US-A 4,988,812);
H) Benzoylcyclohexandione, z.B.
   2-(2-Chlor-4-methylsulfonylbenzoyl)-cyclohexan-1,3-dion (SC-0051, EP-A 0 137 963), 2-(2-Nitrobenzoyl)-4,4-dimethyl-cyclohexan-1,3-dion (EP-A 0 274 634),
   2-(2-Nitro-3-methylsulfonylbenzoyl)-4,4-dimethylcyclohexan-1,3-dion (WO 91/13548);
I) Pyrimidinyloxy-pyridincarbonsäure- bzw. Pyrimidinyloxybenzoesäure-Derivate, z.B.
   3-(4,6-Dimethoxypyrimidin-2-yl)-oxy-pyridin-2-carbonsäurebenzylester (EP-A 0 249 707),
   3-(4,6-Dimethoxypyrimidin-2-yl)-oxy-pyridin-2-carbonsäuremethylester (EP-A 0 249 707),
   2,6-Bis[(4,6-dimethoxypyrimidin-2-yl)-oxy]-benzoesäure (EP-A 0 321 846),
   2,6-Bis[(4,6-dimethoxypyrimidin-2-yl)-oxy]-benzoesäure-1-(ethoxycarbonyl-oxyethyl)-ester (EP-A 0 472 113);
J) S-(N-Aryl-N-alkyl-carbamoylmethyl)-dithiophosphonsäureester, wie S-[N-(4-Chlorphenyl)-N-isopropyl-carbamoylmethyl]-O,O-dimethyl-dithiophosphat (Anilophos).
K) Alkylazine, z.B. wie beschrieben in WO-A 97/08156, WO-A-97/31904, DE-A-19826670, WO-A-98/15536, WO-A-98/15537, WO-A-98/15538, WO-A-98/15539 sowie auch DE-A-19828519, WO-A-98/34925, WO-A-98/42684, WO-A-99/18100, WO-A-99/19309, WO-A-99/37627 und WO-A-99/65882, vorzugsweise solche der Formel (E) 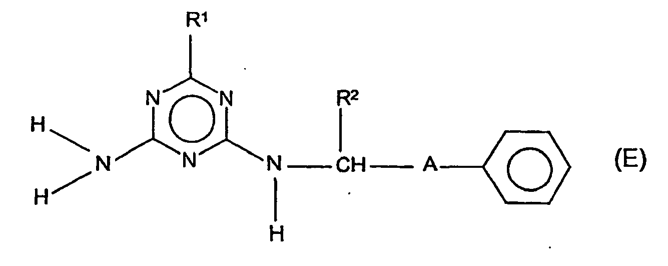
   worin
   - R¹: (C₁-C₄)-Alkyl oder (C₁-C₄)-Haloalkyl;
   - R²: (C₁-C₄)-Alkyl, (C₃-C₆)-Cycloalkyl oder (C₃-C₆)-Cycloalkyl-(C₁-C₄)-Alkyl und
   - A: -CH₂-, -CH₂-CH₂-, -CH₂-CH₂-CH₂-, -O-, -CH₂-CH₂-O-, -CH₂-CH₂-CH₂-O-

   bedeuten, besonders bevorzugt solche der Formel E1-E7 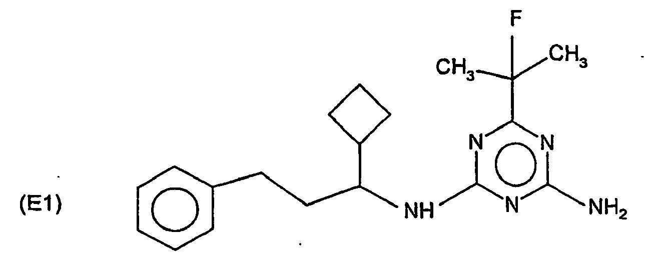 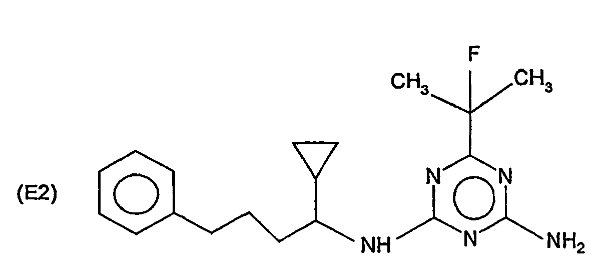 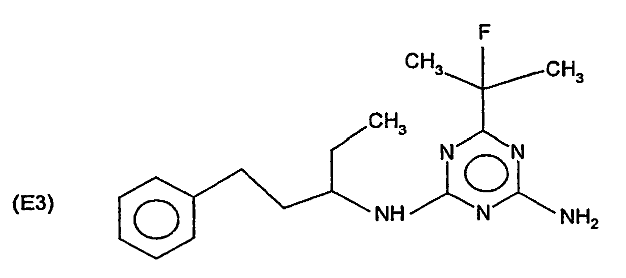 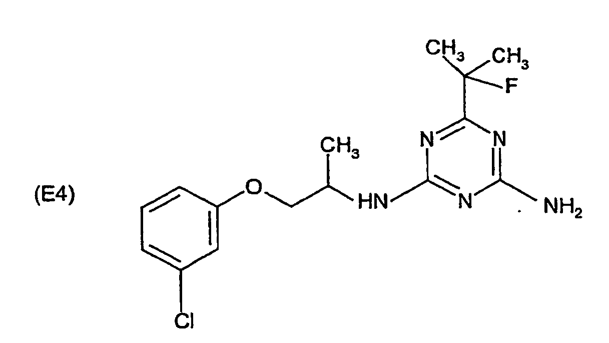 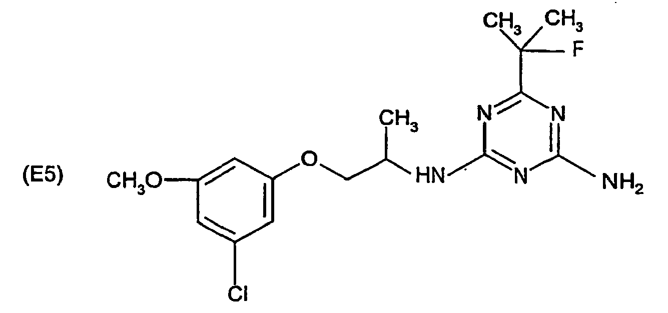 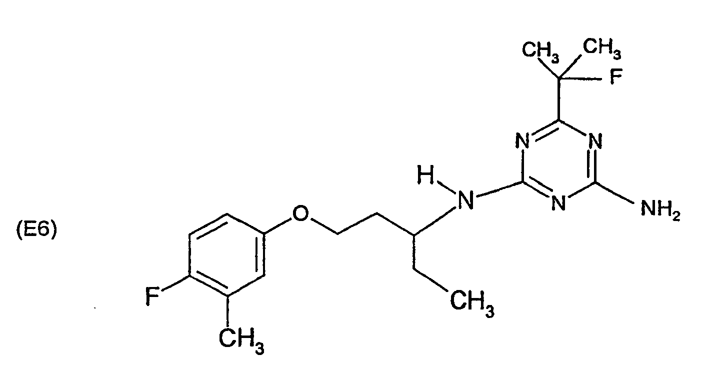 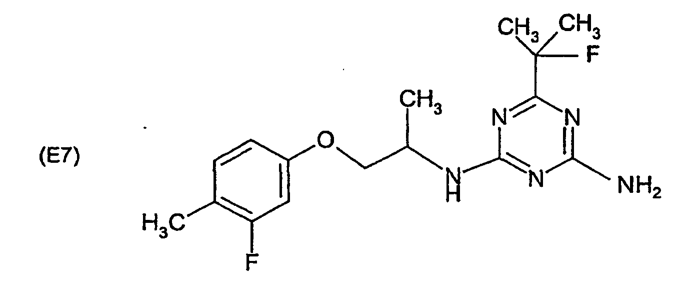
L) Phosphor-haltige Herbizide, z.B. vom Glufosinate-Typ. wie Glufosinate im engeren Sinne, d. h. D,L-2-Amino-4-[hydroxy(methyl)phosphinyl]-butansäure, Glufosinate-monoammoniumsalz, L-Glufosinate, L- oder (2S)-2-Amino-4-[hydroxy(methyl)phosphinyl]-butansäure, L-Glufosinate-monoammoniumsalz oder Bialaphos (oder Bilanafos), d.h. L-2-Amino-4-[hydroxy(methyl)phosphinyl]-butanoyl-L-alanyl-L-alanin, insbesondere dessen Natriumsalz,
   oder vom Glyphosate-Typ wie Glyphosate, d. h. N-(Phosphonomethyl)-glycin, Glyphosate-monoisopropylammoniumsalz, Glyphosate-natriumsalz, oder Sulfosate, d. h. N-(Phosphonomethyl)-glycin-trimesiumsalz = N-(Phosphonomethyl)-glycintrimethylsulfoxoniumsalz.

Die Herbizide der Gruppen B bis L sind beispielsweise aus den oben jeweils genannten Schriften und aus "The Pesticide Manual", 12. Auflage, 1999, The British Crop Protection Council, "Agricultural Chemicals Book II - Herbicides -", by W.T. Thompson, Thompson Publications, Fresno CA, USA 1990 und "Farm Chemicals Handbook '90", Meister Publishing Company, Willoughby OH, USA,1990, bekannt.

Die erfindungsgemäßen herbiziden Mittel, weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfaßt. Dabei ist es gleichgültig, ob die Substanzen im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen herbiziden Mittel kontrolliert werden können, ohne daß durch die Nennung eine Beschränkung auf bestimmte Arten erfolgen soll.

Auf der Seite der monokotylen Unkrautarten werden z. B. Avena, Lolium, Alopecurus, Phalaris, Echinochloa, Digitaria, Setaria sowie Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z. B. Galium, Viola, Veronica, Lamium, Stellaria, Amaranthus, Sinapis, Ipomoea, Matricaria, Abutilon und Sida auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z. B. Echinochloa, Sagittaria, Alisma, Eleocharis, Scirpus und Cyperus werden von den erfindungsgemäßen Mitteln ebenfalls hervorragend bekämpft.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Obgleich die erfindungsgemäßen herbiziden Mittel eine ausgezeichnete herbizide Aktivität gegenüber mono- und dikotylen Unkräutern aufweisen, insbesondere gegenüber dikotylen Unkräutern, werden Kulturpflanzen wirtschaftlich bedeutender Kulturen z. B. zweikeimblättriger Kulturen wie Soja, Baumwolle, Raps, Zuckerrüben, insbesondere Soja, oder Gramineen-Kulturen wie Weizen, Gerste, Roggen, Reis oder Mais, nur unwesentlich oder gar nicht geschädigt. Die vorliegenden Verbindungen eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäßen herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z. B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßen Mittel in wirtschaftlich bedeutenden transgenen Kulturen von Nutz- und Zierpflanzen, z. B. von Getreide wie Weizen, Gerste, Roggen, Hafer, Hirse, Reis, Maniok und Mais oder auch Kulturen von Zuckerrübe, Baumwolle, Soja, Raps, Kartoffel, Tomate, Erbse und anderen Gemüsesorten. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist somit auch die Verwendung der erfindungsgemäßen Mittel als Herbizide zur Bekämpfung von Schadpflanzen, vorzugsweise in Pflanzenkulturen, wobei die Pflanzenkulturen auch transgene Pflanzenkulturen sein können, wie z. B. Bromoxynil-tolerante Baumwolle.

Die erfindungsgemäßen herbiziden Mittel können auch nicht-selektiv zur Bekämpfung unerwünschten Pflanzenwuchses eingesetzt werden, z.B. an Wegrändern, Plätzen, Industrieanlagen oder Eisenbahnanlagen.

Aufgrund der relativ geringen Aufwandmenge der erfindungsgemäßen herbiziden Mittel ist deren Verträglichkeit in aller Regel schon sehr gut. Insbesondere wird durch die erfindungsgemäßen Kombinationen eine Senkung der absoluten Aufwandmenge erreicht, verglichen mit der Einzelanwendung eines herbiziden Wirkstoffs.

Um die Verträglichkeit und/oder Selektivität der erfindungsgemäßen herbiziden Mittel gewünschtenfalls noch zu steigern kann es von Vorteil sein, diese gemeinsam in Mischung oder zeitlich - getrennt nacheinander zusammen mit Safenern oder Antidots anzuwenden.

Als Safener oder Antidots für die erfindungsgemäßen herbiziden Mittel in Frage kommende Verbindungen sind z. B. aus EP-A-333 131 (ZA-89/1960), EP-A-269 806 (US-A-4,891,057), EP-A-346 620 (AU-A-89/34951) und den internationalen Patentanmeldungen PCT/EP 90/01966 (WO-91108202) und PCT/EP 90102020 (WO-911078474) und dort zitierter Literatur bekannt oder können nach den dort beschriebenen Verfahren hergestellt werden. Weitere geeignete Safener kennt man aus EP-A-94 349 (US-A-4,902,304), EP-A-191 736 (US-A-4,881,966) und EP-A-0 492 366 und der dort zitierten Literatur.

In einer bevorzugten Ausführungsform enthalten die herbiziden Mittel der vorliegenden Erfindung daher einen zusätzlichen Gehalt an C) einer oder mehrerer Verbindungen, die als Safener oder Antidots wirken.

Bevorzugte Antidots oder Safener oder Gruppen von Verbindungen die sich als Safener oder Antidots in den erfindungsgemäßen herbiziden Mitteln eignen sind unter anderem:
a) Verbindungen vom Typ der Dichlorphenylpyrazolin-3-carbonsäure, vorzugsweise Verbindungen wie 1-(2,4-Dichlorphenyl)-5-(ethoxycarbonyl)-5-methyl-2-pyrazolin-3-carbonsäureethylester (Mefenpyr-diethyl, Verbindung C1 -1) und verwandte Verbindungen, wie sie in der internationalen Anmeldung WO 91/07874 (PCT/EP 90102020) beschrieben sind;
b) Derivate der Dichlorphenylpyrazolcarbonsäure, vorzugsweise Verbindungen wie 1-(2,4-Dichlorphenyl)-5-methyl-pyrazol-3-carbonsäureethylester (Verbindung C1-2), 1-(2,4-Dichlorphenyl)-5-isopropyl-pyrazol-3-carbonsäureethylester (Verbindung C1-3), 1-(2,4-Dichlorphenyl)-5-(1,1-dimethyl-ethyl)-pyrazol-3-carbonsäureethylester (Verbindung C1-4), 1-(2,4-Dichlorphenyl)-5-phenyl pyrazol-3-carbonsäureethylester (Verbindung C1-5) und verwandte Verbindungen, wie sie in EP-A-0 333 131 und EP-A-0 269 806 beschrieben sind;
c) Verbindungen vom Typ der Triazolcarbonsäuren, vorzugsweise Verbindungen wie 1-(2,4-Dichlorphenyl)-5-trichlormethyl-(1 H)-1,2,4-triazol-3-carbonsäureethylester (Verbindung C1 -6, Fenchlorazol-ethyl) und verwandte Verbindungen (siehe EP-A-0 174 562 und EP-A-0 346 620);
d) Verbindungen vom Typ der Dichlorbenzyl-2-isoxazolin-3-carbonsäure, Verbindungen vom Typ, der 5-Benzyl- oder 5-Phenyl-2-isoxazolin-3-carbonsäure, vorzugsweise Verbindungen wie 5-(2,4-Dichlorbenzyl)-2-isoxazolin-3-carbonsäureethylester (Verbindung C1 -7) oder 5-Phenyl-2-isoxazolin-3-carbonsäureethylester (Verbindung C1-8) und verwandte Verbindungen wie sie in der internationalen Patentanmeldung WO 91/08202 (PCT/EP 90/01966) beschrieben sind;
e) Verbindungen vom Typ der 8-Chinolinoxyessigsäure, vorzugsweise Verbindungen wie (5-Chlor-8-chinolinoxy)-essigsäure-(1 -methyl-hex-1 -yl)-ester (Cloquintocet -mexyl, C2-1), (5-Chlor-8-chinolinoxy)-essigsäure-(1,3-dimethyl-but-1-yl)-ester (C2-2), (5-Chlor-8-chinolinoxy)-essigsäure-4-allyl-oxy-butylester (C2-3), (5-Chlor-8-chinolinoxy)-essigsäure-1-allyl-oxy-prop-2-ylester (C2-4), (5-Chlor-8-chinolinoxy)-essigsäureethylester (C2-5), (5-Chlor-8-chinolinoxy)-essigsäuremethylester (C2-6), (5-Chlor-8-chinolinoxy)-essigsäureallylester (C2-7), (5-Chlor-8-chinolinoxy)-essigsäure-2-(2-prpyliden-iminoxy)-1-ethylester (C2-8), (5-Chlor-8-chinolinoxy)-essigsäure-2-oxo-prop-1-ylester (C2-9) und verwandte Verbindungen wie sie in EP-A-0 086 750, EP-A-0 094 349 und EP-A-0 191 736 oder EP-A-0 492 366 beschrieben sind;
f) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallyester, (5-Chlor 8-chinolinoxy)-malonsäuremethylethylester und verwandte Verbindungen wie sie in der deutschen Patentanmeldung EP-A-0 582 198 beschrieben und vorgeschlagen worden sind;
g) Wirkstoffe vom Typ der Phenoxyessig- bzw. -propionsäurederivate bzw. der aromatischen Carbonsäuren, wie z. B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba);
h) Verbindungen vom Typ der 5,5-Diphenyl-2-isoxazolin-3-carbonsäure, vorzugsweise 5,5-Diphenyl-2-isoxazolin-3-carbonsäureethylester (Isoxadifenethyl, C3-1);
i) Verbindungen, die als Safener z.B. für Reis bekannt sind wie Fenclorim (= 4,6-Dichlor-2-phenylpyrimidin, Pesticide Manual, 12. Auflage, 1999, S. 386/387), Dimepiperate (= Piperidin-1 thiocarbonsäure-S-1 -methyl-1 -phenylethylester, Pesticide Manual, 12. Auflage, 1999, S. 302/303), Daimuron (=1 -(1 -Methyl-1-phenylethyl)-3-p-tolyl-harnstoff, Pesticide Manual, 12. Auflage, 1999, S. 247), Cumyluron (= 3-(2-Chlorphenylmethyl)-1 -(1 -methyl-1-phenyl-ethyl)- hamstoff, JP-A-60/087254), Methoxyphenon (= 3,3'-Dimethyl-4-methoxy benzophenon, CSB (= 1-Brom-4-(chlormethylsulfonyl)-benzol, CAS-Reg. Nr. 54091-06-4).
   Die genannten Verbindungen sind außerdem zumindest teilweise in der EP-A-0 640 587 beschrieben.
j) Eine weitere wichtige Gruppe von als Safenern und Antidoten geeignete Verbindungen ist aus der WO 95107897 bekannt

Die Safener (Antidote) der vorstehenden Gruppen a) bis j) reduzieren oder unterbinden phytotoxische Effekte, die beim Einsatz der herbiziden Mittel gemäß der Erfindung in Nutzpflanzenkulturen auftreten können, ohne die Wirksamkeit der Herbizide gegen Schadpflanzen zu beeinträchtigen. Hierdurch kann das Einsatzgebiet der erfindungsgemäßen herbiziden Mittel erheblich erweitert werden und insbesondere ist durch die Verwendung von Safenem der Einsatz von Kombinationen möglich, die bislang nur beschränkt oder mit nicht ausreichendem Erfolg eingesetzt werden konnten, d. h. von Kombinationen, die ohne Safener in niedrigen Dosierungen mit wenig Breitenwirkung zu nicht ausreichender Kontrolle der Schadpflanzen führten.

Die herbiziden Mittel gemäß der Erfindung und die erwähnten Safener können zusammen (als fertige Formulierung oder im Tankmisch-Verfahren) oder in beliebiger Reihenfolge nacheinander ausgebracht werden. Das Gewichtsverhältnis Safener:Herbizid (Verbindung(en) der Formel (I) und/oder ihre Salze) kann innerhalb weiter Grenzen variieren und liegt vorzugsweise im Bereich von 1 : 100 bis 1.00 : 1, insbesondere von 1 : 10 bis 10:1. Die jeweils optimalen Mengen an Herbizid(en) und Safener(n) sind üblicherweise vom Typ des herbiziden Mittels und/oder vom verwendeten Safener sowie von der Art des zu behandelnden Pflanzenbestandes abhängig.

Die Safener vom Typ C) können je nach ihren Eigenschaften zur Vorbehandlung des Saatgutes der Kulturpflanze (Beizung der Samen) verwendet werden oder vor der Saat in die Saatfurchen eingebracht oder zusammen mit der Herbizidmischung vor oder nach dem Auflaufen der Pflanzen angewendet werden.

Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit der Herbizidmischung. Hierzu können Tankmischungen oder Fertigformulierungen eingesetzt werden.

Die benötigten Aufwandmengen der Safener können je nach Indikation und verwendetem Herbizid innerhalb weiter Grenzen schwanken und liegen in der Regel im Bereich von 0,001 bis 1 kg, vorzugsweise 0,005 bis 0,2 kg Wirkstoff je Hektar.

Gegenstand der vorliegenden Erfindung ist auch ein Verfahren zur Bekämpfung von unerwünschten Pflanzen, vorzugsweise in Pflanzenkulturen, das dadurch gekennzeichnet ist, daß eine herbizid wirksame Menge des erfindungsgemäßen herbiziden Mittels auf die Pflanzen, Pflanzenteile, Pflanzensamen oder die Anbaufläche ausgebracht wird.

Eine bevorzugte Verfahrensvariante ist die Ausbringung der erfindungsgemäßen herbiziden Mittel in Form von Tankmischungen, wobei die Einzelkomponenten, z. B. in Form von Formulierungen, gemeinsam im Tank mit Wasser oder einem Öl gemischt werden und die erhaltene Spritzbrühe ausgebracht wird. Da die Kulturpflanzenverträglichkeit der erfindungsgemäßen Kombinationen bei gleichzeitig sehr hoher Kontrolle der Schadpflanzen ausgesprochen gut ist, können diese als selektiv angesehen werden. In bevorzugter Verfahrensabwandlung werden herbizide Mittel daher zur selektiven Bekämpfung unerwünschter Pflanzen eingesetzt.
Die Ausbringung der herbiziden Mittel kann in üblicher Weise erfolgen, zum Beispiel mit Wasser und / oder Öl als Träger in Spritzbrühmengen von etwa 0,5 - 4000, vorzugsweise 100 bis 1000 Liter/ha. Eine Anwendung der Mittel im sog. Low-Volume- und Ultra-Low-Volume-Verfahren (ULV) ist ebenso möglich wie ihre Applikation in Form von Granulaten und Mikrogranulaten.

Eine bevorzugte Verwendung betrifft den Einsatz von herbiziden Mitteln, die Gehalte von A)- und B)-Komponenten in einer synergistisch wirksamen Menge aufweisen. Zur Erfindung gehören auch Mischungen von einem oder mehreren Kombinationspartnern A), vorzugsweise A1, A2, A3, A4, A5, A6, A7, A8, A9 und / oder A10 und einem oder mehreren Kombinationspartnern B), gegebenenfalls in Kombination mit einem oder mehreren Safenern C).

Als bevorzugte Beispiele für die erfindungsgemäßen herbiziden Mittel seien folgende Kombinationen von A1, A2, A3, A4, A5, A6, A7, A8, A9 und / oder A10 mit Tensiden B) genannt, ohne daß dadurch eine Einschränkung auf die explizit genannten Kombinationen erfolgen soll:
A1 in Kombination mit einem der Tenside aus der Gruppe B1 bis B 65 (siehe Tabelle 1)
A2 in Kombination mit einem der Tenside aus der Gruppe B1 bis B 65 (siehe Tabelle 1)
A3 in Kombination mit einem der Tenside aus der Gruppe B1 bis B 65 (siehe Tabelle 1)
A4 in Kombination mit einem der Tenside aus der Gruppe B1 bis B 65 (siehe Tabelle 1)
A5 in Kombination mit einem der Tenside aus der Gruppe B1 bis B 65 (siehe Tabelle 1)
A6 in Kombination mit einem der Tenside aus der Gruppe B1 bis B 65 (siehe Tabelle 1)
A7 in Kombination mit einem der Tenside aus der Gruppe B1 bis B 65 (siehe Tabelle 1)
A8 in Kombination mit einem der Tenside aus der Gruppe B1 bis B 65 (siehe Tabelle 1)
A9 in Kombination mit einem der Tenside aus der Gruppe B1 bis B 65 (siehe Tabelle 1)
A10 in Kombination mit einem der Tenside aus der Gruppe B1 bis B 65 (siehe Tabelle 1)
A11 in Kombination mit einem der Tenside aus der Gruppe B1 bis B 65 (siehe Tabelle 1)
A12 in Kombination mit einem der Tenside aus der Gruppe B1 bis B 65 (siehe Tabelle 1)

Daneben können in den herbiziden Mitteln der vorliegenden Erfindung zur Abrundung der Eigenschaften, im allgemeinen in untergeordneten Mengen, zusätzlich einer, zwei oder mehrere von der Komponente A) verschiedene agrochemische Wirkstoffe (z.B. Herbizide, Insektizide oder Fungizide) enthalten sein.

Damit ergeben sich zahlreiche Möglichkeiten mehrere Wirkstoffe miteinander zu kombinieren und gemeinsam zur Bekämpfung von Schadpflanzen, vorzugsweise in Pflanzenkulturen einzusetzen.

Zusammenfassend kann gesagt werden, daß bei gemeinsamer Anwendung von Verbindungen der Formel (I) mit einem oder mehreren Tensiden B) eine ausgezeichnete herbizide Wirkung erzielt wird. Dabei ist die Wirkung der erfindungsgemäßen herbiziden Mittel in einer bevorzugten Ausführungsform stärker als die Wirkung der eingesetzten Einzelkomponenten bei alleiniger Anwendung. Diese Effekte erlauben unter anderem eine Reduzierung der Aufwandmenge, die Bekämpfung eines breiteren Spektrums von Unkräutern und Ungräsem, die Schließung von Wirkungslücken, auch hinsichtlich resistenter Arten, eine schnellere und sicherere Wirkung, eine komplette Kontrolle der Schadpflanzen mit nur einer oder wenigen Applikationen, und eine Ausweitung des Anwendungszeitraumes.

Die genannten Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch die erfindungsgemäßen Kombinationen bezüglich der beschriebenen Eigenschaften deutlich übertroffen. Darüberhinaus gestatten die erfindungsgemäßen Kombinationen in hervorragender Weise die Bekämpfung ansonsten resistenter Schadpflanzen.

### Beispiele

### Formulierungsbeispiel 1 (Referenzbeispiel)

Ein Beispiel für eine erfindungsgemäße Kombination von Verbindungen der Formel (I) mit Tensiden ist eine SL-Formulierung, die 5% Bromoxynil-Kalium, 10% Genapol®-X-150 und 84,8% Wasser sowie 0,2% Biozid Mirgal® A enthält. Diese wird erhalten, indem die Substanzen nacheinander unter Rühren in Wasser eingetragen werden. Auf analoge Weise können Formulierungen mit anderen Tensiden hergestellt werden, wobei das Verhältnis Wirkstoff-Tensid in weiten Bereichen schwanken kann.

### Formulierungsbeispiel 2 (Gemäß Erfindung)

In einem 1 I Vierhalskolben wird eine wäßrige Phase bestehend aus 57,9 Gew.-% Wasser, 5,0 Gew.% Atlox® Metasperse 550 S, 1,0 Gew.-% Polyethylenglykol (Molgewicht: 4000), 5,0 Gew.% Emulsogen® EL 400 und 0,1 Gew.-% Rhodorsil® 432 bei 60°C gerührt. Eine organische Phase bestehend aus 11,1 Gew.-% Bromoxyniloctanoate, 10,0 Gew.% Solvesso® 200 und 1,0 Gew.% Voranate® M 220 wird ebenfalls auf 60°C erwärmt und unter starkem Rühren (300 U/min.) in die wäßrige Phase eingetragen. Anschließend wird bei hohen Drehzahlen (1500 - 2000 U/min.) geschert, bis die gewünschte Teilchengröße erreicht ist (bis zu 1 Minute) und dann bei Drehzahlen von ca. 50 - 100 U/min. für 6 Stunden nachgerührt. Man erhält so eine Mikrokapselsuspension (CS) mit mittlerem Kapseldurchmesser von 2 - 20 Mikrometern.

### Biologische Beispiele

Samen bzw. Rhizomstücke von mono- und dikotylen Unkräutern wurden in Plastiktöpfen in sandigem Lehmboden ausgelegt, mit Erde abgedeckt und im Gewächshaus unter guten Wachstumsbedingungen angezogen. Drei Wochen nach der Aussaat wurden die Versuchspflanzen im Dreiblattstadium behandelt. Die als Spritzpulver bzw. als Emulsionskonzentrate formulierten erfindungsgemäßen Mittel wurden in verschiedenen Dosierungen mit einer Wasseraufwandmenge von umgerechnet 600 - 800l/ha auf die grünen Pflanzenteile gesprüht. Nach ca. 3 bis 4 Wochen Standzeit der Versuchspflanzen im Gewächshaus unter optimalen Wachstumsbedingungen wurde die Wirkung der Präparate optisch im Vergleich zu unbehandelten Kontrollen bonitiert. Die erfindungsgemäßen Mittel weisen eine gute herbizide Wirksamkeit gegen wirtschaftlich wichtige Schadpflanzen auf. Beispielsweise wird die Wirkung von Bromoxynil-Na (300g /ha) durch Kombination mit einem Tensid wie Genapol® X 150, Genapol® X 200, Sapogenat® T130, Sapogenat® T 200, Sapogenat® T 300, Sapogenat® T 400, Sapogenat® T 500 oder Genapol® O 200 bei Aufwandmengen von z. B. 50g /ha, 100g /ha, 300g /ha und 60g /ha deutlich erhöht im Vergleich z. B. zur Applikation von Bromoxynil-Na mit einem Tensid mit niedrigem Gehalt an Ethylenoxideinheiten wie Genapol® X 060 (6 Ethylenoxideinheiten).

Bromoxyniloctanoat (300g AS/ha und 600g AS/ha), nach Formulierungsbeispiel 2 als Mikrokapselsuspension (10-%ig) formuliert und zusammen mit einem Tensid wie Genapol® X 150, Genapol® X 200, Sapogenat® T130, Sapogenat® T 200, Sapogenat® T 300, Sapogenat® T 400, Sapogenat® T 500 oder Genapol® O 200 bei Aufwandmengen von 150g Tensid/ha, 300g Tensid/ha und 600g Tensid/ha appliziert, zeigte eine herbizide Wirkung, die deutlich erhöht war im Vergleich zu einer kommerziellen Formulierung von Bromoxyniloctanoat.

## Patentansprüche

1. Herbizides Mittel, enthaltend
A) eine oder mehrere Verbindungen der Formel (I) 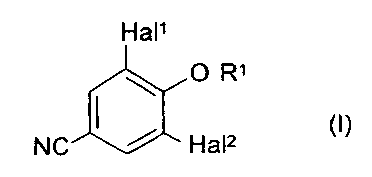
worin
Hal¹ und Hal² gleiche oder voneinander verschiedene Halogenatome sind,
R¹ H, ein Kation oder ein C₁-C₂₀-kohlenstoffhaftiger Rest bedeutet,
und wobei die Verbindung(en) in Mikrokapseln aus polymeren Materialien synthetischer und/oder natürlicher Herkunft eingebracht sind , sowie
B) eines oder mehrere Tenside, enthaltend als Strukturelement mindestens 12 Alkylenoxideinheiten.

2. Herbizides Mittel gemäß Anspruch 1, enthaltend als Komponente B) eines oder mehrere Tenside der allgemeinen Formel (II)
R^{γ}-(EO)ₓ (PO)_{y} (EO)_{z}-R^{δ} (II)
worin
EO eine Ethylenoxideinheit bedeutet,
PO eine Propylenoxideinheit bedeutet,
x eine ganze Zahl von 0 bis 50, vorzugsweise 1 bis 50 bedeutet,
y eine ganze Zahl von 0 bis 50 bedeutet,
z eine ganze Zahl von 0 bis 50 bedeutet,
wobei die Summe (x+y+z)≥ 12 und ≤ 150 ist, und
R^{γ} OH, einen unsubstituierten oder substituierten C₁-C₄₀₋Kohlenwasserstoffoxyrest, einen O-Acylrest oder NR^{I}R^{II} oder [NR^{I}R^{II}R^{III}]^{⊕}X^{⊖} bedeuten, worin R^{I}, R^{II} und R^{III} gleich oder verschieden H oder einen unsubstituierten oder substituierten C₁-C₃₀- Kohlenwasserstoffrest bedeuten, der optional über eine Gruppe (EO)_{w}, worin w eine ganze Zahl von 1 bis 50 ist, gebunden sein kann, und X^{⊖} ein Anion ist, und
R^{δ} H, einen unsubstituierten oder substituierten C₁-C₄₀₋Kohlenwasserstoffrest, einen Acylrest oder NR^{I}R^{II} oder [NR^{I}R^{II}R^{III}]^{⊕}X^{⊖} bedeuten, worin R^{I}, R^{II} und R^{III} gleich oder verschieden H oder einen unsubstituierten oder substituierten C₁-C₃₀-Kohlenwasserstoffrest bedeuten, der optional über eine Gruppe (EO)_{w}, worin w eine ganze Zahl von 1 bis 50 ist, gebunden sein kann, und X^{⊖} ein Anion ist.

3. Herbizides Mittel nach Anspruch 1 oder 2, zusätzlich enthaltend eine oder mehrere weitere Komponenten aus der Gruppe enthaltend agrochemische Wirkstoffe anderer Art, im Pflanzenschutz übliche Zusatzstoffe und Formulierungshilfsmittel.

4. Herbizides Mittel gemäß einem oder mehreren der Ansprüche 1-3, wobei die die Verbindung A enthaltende Mikrokapsel als polymeres Material eines oder mehrere der Polymere ausgewählt aus der Gruppe der Polyharnstoffe, Polyurethane, Polyamide, Melaminharze, Gelatine, Wachs oder Stärke enthält.

5. Verfahren zur Bekämpfung von Schadpflanzen, worin das herbizide Mittel, definiert gemäß einem oder mehreren der Ansprüche 1 bis 4, im Vorauflauf, Nachauflauf oder im Vor- und Nachauflauf auf die Pflanzen, Pflanzenteile, Pflanzensamen oder die Anbaufläche appliziert wird.

6. Verfahren nach Anspruch 5 zur selektiven Bekämpfung von Schadpflanzen in Pflanzenkulturen.

7. Verwendung des nach einem der Ansprüche 1 bis 4 definierten herbiziden Mittels zur Bekämpfung von Schadpflanzen.

8. Verfahren zur Herstellung eines herbiziden Mittels, definiert gemäß einem oder mehreren der Ansprüche 1 bis 4, wobei die Verbindung(en) der Formel (I) mit einem oder mehreren Tensiden B) gemischt werden.

9. Verfahren gemäß Anspruch 8, worin die Komponenten A) und B) im Tankmischverfahren mit Wasser und / oder einem Öl gemischt werden.

## Claims

1. A herbicidal composition, comprising
A) one or more compounds of the formula (I) 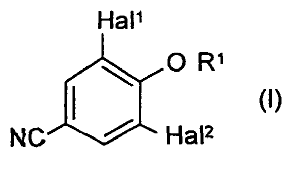
in which
Hal¹ and Hal² are identical or different halogen atoms,
R¹ is H, a cation or a C₁-C₂₀-carbon-containing radical,
and where the compound(s) is/are introduced into microcapsules made from polymer material of synthetic and/or natural origin, and
B) one or more surfactants, comprising as structural element at least 12 alkylene oxide units.

2. The herbicidal composition as claimed in claim 1, comprising as component B) one or more surfactants of the formula (II)
R^{γ}-(EO)ₓ (PO)_{y} (EO)_{z}-R^{δ} (II)
in which
EO is an ethylene oxide unit,
PO is a propylene oxide unit,
x is an integer from 0 to 50, preferably from 1 to 50,
y is an integer from 0 to 50,
z is an integer from 0 to 50,
where the sum (x+y+z)≥ 12 and ≤ 150, and
R^{γ} is OH, an unsubstituted or substituted C₁-C₄₀-hydrocarbonoxy radical, an O-acyl radical or NR^{I}R^{II} or [NR^{I}R^{II}R^{III}]^{⊕}X^{⊖}, where R^{I}, R^{II} and R^{III} are identical or different and are H or an unsubstituted or substituted C₁-C₃₀-hydrocarbon radical which may optionally be attached via a group (EO)_{w}, where w is an integer from 1 to 50, and where X^{⊖} is an anion, and
R^{δ} is H, an unsubstituted or substituted C₁-C₄₀-hydrocarbon radical, an acyl radical or NR^{I}R^{II} or [NR^{I}R^{II}R^{III}]^{⊕}X^{⊖}, where R^{I}, R^{II} and R^{III} are identical or different and are H or an unsubstituted or substituted C₁-C₃₀-hydrocarbon radical which may be attached via a group (EO)_{w}, where w is an integer from 1 to 50, and where X^{⊖} is an anion.

3. The herbicidal composition as claimed in claim 1 or 2, which additionally comprises one or more further components from the group consisting of agrochemically active compounds of a different type and formulation auxiliaries and additives customary in crop protection.

4. The herbicidal composition as claimed in one or more of claims 1-3, wherein the microcapsule comprising the compound of the formula (I) comprises as polymer material one or more polymers selected from the group consisting of polyureas, polyurethanes, polyamides, melamine resins, gelatin, wax and starch.

5. A method for controlling harmful plants, which comprises applying the herbicidal composition defined according to one or more of claims 1 to 4 by the pre-emergence method, the post-emergence method or the pre- and postemergence method to the plants, parts of plants, plant seeds or the area under cultivation.

6. The method as claimed in claim 5 for the selective control of harmful plants in crop plants.

7. The use of the herbicidal composition defined in any of claims 1 to 4 for controlling harmful plants.

8. A process for preparing a herbicidal composition defined according to one or more of claims 1 to 4, which comprises mixing the compound(s) of the formula (I) with one or more surfactants B).

9. The process as claimed in claim 8 in which components A) and B) are mixed in a tank mix process with water and/or an oil.

## Revendications

1. Agent herbicide renfermant
A) un ou plusieurs composés de formule (I) 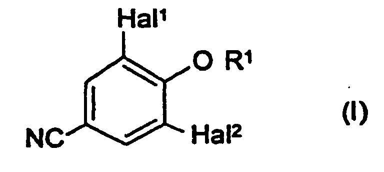
dans laquelle
Hal¹ et Hal² sont des atomes d'halogènes identiques ou différents,
R¹ représente un atome d'hydrogène, un cation ou un reste hydrocarboné en C₁-C₂₀,
et le(s) composé(s) étant introduit(s) dans des microcapsules en matières polymères d'origine synthétique et/ou naturelle, ainsi que
B) un ou plusieurs agents de surface renfermant, en tant qu'unité de structure, au moins 12 unités oxyde d'alkylène.

2. Agent herbicide selon la revendication 1, renfermant en tant que composant B) un ou plusieurs agents de surface de formule générale (II)
R^{γ}-(OE)ₓ(OE)_{y}(OE)_{z}-R^{δ} (II)
dans laquelle
OE représente une unité oxyde d'éthylène,
OP représente une unité oxyde de propylène,
x est un entier de 0 à 50, de préférence de 1 à 50,
y est un entier de 0 à 50,
z est un entier de 0 à 50,
la somme de (x+y+z)≥ 12 et ≤150, et
R^{γ} représente un groupe OH, un reste hydrocarboxy en C₁-C₄₀ non substitué ou substitué, un reste O-acyle ou NR^{I}R^{II} ou [NR^{I}R^{II}R^{III}]^{⊕}X^{⊖}, dans lesquelles R^{I}, R^{II} et R^{III} identiques ou différents représentent un atome d'hydrogène ou un reste hydrocarboné en C₁-C₃₀ non substitué ou substitué, qui peut être facultativement lié par l'intermédiaire d'un groupe (OE)_{w}, où w est un entier de 1 à 50, et X^{⊖} est un anion
et
R^{δ} représente un atome d'hydrogène, un reste hydrocarboné en C₁-C₄₀ non substitué ou substitué, un reste acyle ou NR^{I}R^{II} ou [NR^{I}R^{II}R^{III}]^{⊕}X^{⊖}, dans lesquelles R^{I}, R^{II} et R^{III} identiques ou différents représentent un atome d'hydrogène ou un reste hydrocarboné en C₁-C₃₀ non substitué ou substitué, qui peut facultativement être lié par l'intermédiaire d'un groupe (OE)_{w}, où w est un entier de 1 à 50, et X^{⊖} est un anion

3. Agent herbicide selon la revendication 1 ou 2, renfermant de plus un ou plusieurs autres composants pris dans le groupe comprenant des matières actives agrochimiques d'un type différent, des matières d'addition et des formulants courants dans la phytoprotection.

4. Agent herbicide selon une ou plusieurs des revendication 1 à 3, où la microcapsule renfermant le composé de formule (I) en tant que matière polymère est prise parmi un ou plusieurs des polymères pris dans le groupe comprenant les polyurées, les polyuréthannes, les polyamides, les résines de mélamine, la cire ou l'amidon.

5. Procédé pour la lutte contre les mauvaises herbes, dans lequel l'agent herbicide, défini selon une ou plusieurs des revendications 1 à 4, est appliqué en prélevée, en postlevée ou en prélevée et en postlevée, aux plantes, aux parties de plantes, au semis des plantes ou à la surface cultivable.

6. Procédé selon la revendication 5 pour la lutte sélective contre les mauvaises herbes dans les cultures végétales.

7. Utilisation de l'agent herbicide défini selon l'une des revendications 1 à 4, pour la lutte contre les mauvaises herbes.

8. Procédé pour la préparation d'un agent herbicide défini selon une ou plusieurs des revendications 1 à 4, le(s) composé(s) de formule (I) étant mélangés avec un ou plusieurs agents de surface B).

9. Procédé selon la revendication 8, dans lequel les composants A) et B) sont mélangés dans le procédé de mélange en cuve avec l'eau et/ou une huile.
